(19) Europäisches Patentamt
European Patent Office
Office européen des brevets

(11) EP 1 794 564 B1

(12) EUROPÄISCHE PATENTSCHRIFT

(45) Veröffentlichungstag und Bekanntmachung des Hinweises auf die Patenterteilung:
25.03.2015 Patentblatt 2015/13

(51) Int Cl.:
G10L 19/008 (2013.01)   G11B 27/031 (2006.01)
G11B 27/10 (2006.01)   H04H 20/28 (2008.01)
H04H 20/89 (2008.01)

(21) Anmeldenummer: 05790732.1

(22) Anmeldetag: 23.09.2005

(86) Internationale Anmeldenummer:
PCT/EP2005/010329

(87) Internationale Veröffentlichungsnummer:
WO 2006/034825 (06.04.2006 Gazette 2006/14)

(54) **VORRICHTUNG UND VERFAHREN ZUM SYNCHRONISIEREN VON ZUSATZDATEN UND BASISDATEN**

DEVICE AND METHOD FOR SYNCHRONISING ADDITIONAL DATA AND BASE DATA

DISPOSITIF ET PROCEDE POUR SYNCHRONISER DES DONNEES SUPPLEMENTAIRES ET DES DONNEES DE BASE

(84) Benannte Vertragsstaaten:
AT BE BG CH CY CZ DE DK EE ES FI FR GB GR HU IE IS IT LI LT LU LV MC NL PL PT RO SE SI SK TR

(30) Priorität: 27.09.2004 DE 102004046746

(43) Veröffentlichungstag der Anmeldung:
13.06.2007 Patentblatt 2007/24

(73) Patentinhaber: Fraunhofer-Gesellschaft zur Förderung der
angewandten Forschung e.V.
80686 München (DE)

(72) Erfinder:
• HERRE, Juergen
  91054 Buckenhof (DE)
• HELLMUTH, Oliver
  91052 Erlangen (DE)
• HOELZER, Andreas
  91054 Erlangen (DE)
• GEYERSBERGER, Stefan
  97076 Wuerzburg (DE)

(74) Vertreter: Zinkler, Franz et al
Schoppe, Zimmermann, Stöckeler
Zinkler, Schenk & Partner mbB
Patentanwälte
Postfach 15 15 29
80049 München (DE)

(56) Entgegenhaltungen:
• ROLF BARDELI, FRANK KURTH: "Robust Identification of Time-Scaled Audio" AES 25TH CONFERENCE,PROCEEDINGS OF, [Online] 17. Juni 2004 (2004-06-17), - 19. Juni 2004 (2004-06-19) Seiten 1-12, XP002357490 LONDON, UK Gefunden im Internet: URL:http://www-mmdb.iai.uni-bonn.de/downlo ad/ publications/aes25timescale.pdf> [gefunden am 2005-12-02]
• TON KALKER, DICK H.J. EPEMA, PIETER H. HARTEL, R.L. LAGENDIJK, MAARTEN VAN STEEN: "Music2Share-Copyright-Compliant Music Sharing in P2P Systems" PROCEEDINGS OF THE IEEE, [Online] Bd. 92, Nr. 6, Juni 2004 (2004-06), Seiten 961-970, XP002357491 Gefunden im Internet: URL:http:// ieeexplore.ieee.org/iel5/5/2886 4/01299170.pdf> [gefunden am 2005-12-02]
• C BURGES, D PLASTINA, J PLATT, E RENSHAW, H MALVAR: "DUPLICATE DETECTION AND AUDIO THUMBNAILS WITH AUDIO FINGERPRINTING" MICROSOFT RESEARCH TECHNICAL REPORT, [Online] März 2004 (2004-03), Seiten 1-4, XP002357492 REDMOND, WA, US Gefunden im Internet: URL:http: //www.research.microsoft.com/~cbu rges/tech_ reports/tr-2004_19.pdf> [gefunden am 2005-12-02]

- **ALLAMANCHE E ET AL: "AUDIOID: TOWARDS CONTENT-BASED IDENTIFICATION OF AUDIO MATERIAL" AUDIO ENGINEERING SOCIETY CONVENTION PAPER, NEW YORK, NY, US, 12. Mai 2001 (2001-05-12), Seiten 1-11, XP009028034**
- **CANO P ET AL: "A review of algorithms for audio fingerprinting" PROCEEDINGS OF THE 2003 IEEE RADAR CONFERENCE. HUNTSVILLE, AL, MAY 5 - 8, 2003, IEEE RADAR CONFERENCE, NEW YORK, NY : IEEE, US, 9. Dezember 2002 (2002-12-09), Seiten 169-173, XP010642539 ISBN: 0-7803-7920-9**
- **HAITSMA J ET AL: "Speed-change resistant audio fingerprinting using auto-correlation" 2003 IEEE INTERNATIONAL CONFERENCE ON ACOUSTICS, SPEECH, AND SIGNAL PROCESSING. PROCEEDINGS. (ICASSP). HONG KONG, APRIL 6 - 10, 2003, IEEE INTERNATIONAL CONFERENCE ON ACOUSTICS, SPEECH, AND SIGNAL PROCESSING (ICASSP), NEW YORK, NY : IEEE, US, Bd. VOL. 1 OF 6, 6. April 2003 (2003-04-06), Seiten IV728-IV731, XP010641263 ISBN: 0-7803-7663-3**

EP 1 794 564 B1

**Beschreibung**

Die vorliegende Erfindung bezieht sich auf die Multimediadatenverarbeitung und insbesondere auf die zeitsynchrone Hinzufügung von insbesondere Audio-Zusatzinformationen zu Audio-Basisdaten.

Gerade in der Entwicklung befindliche oder auch zukünftige Technologien ermöglichen eine immer effizientere Speicherung von Audiosignalen oder Videosignalen, aber auch eine Steigerung des Hör- bzw. Sehgenusses durch Erweiterungen, wie beispielsweise durch den Einsatz der Mehrkanaltechnik. Solche Erweiterungen können in neuen Dateiformaten abgelegt und zusammen mit den Audiobasisdaten, welche beispielsweise ein Mono- oder Stereoaudiosignal sein können, dem Nutzer zur Verfügung gestellt werden. Die Erweiterungsdaten können zum Beispiel Mehrkanalzusatzinformationen sein. Dies bedeutet, dass sowohl die Audiobasisdaten, als auch die Erweiterungsdaten in einem gemeinsamen Datenstrom, bzw. einer Datei enthalten sind.

Es ist jedoch auch gleichzeitig interessant, dass ein Nutzer, der bereits eine Stereoversion eines Audiosignals besitzt, lediglich eine Erweiterung, nämlich den Mehrkanalton, erhält und seinem bestehenden Audiosignal, bzw. der entsprechenden Datei, nachträglich hinzufügt. Insbesondere diese Variante hat verschiedene Vorteile. So müssen nicht unnötig Daten übertragen werden, welche ohnehin schon beim Benutzer vorhanden sind. Insbesondere in einem Szenario, in dem ein Dienst-Anbieter seine Leistung nach der Menge der über sein Netz übertragenen Daten abrechnet, kann ein Nutzer eine erhebliche Kosteneinsparung dadurch erzielen, dass er so wenig Daten als möglich über ein Netz empfängt.

So ist ein Benutzer beispielsweise im Besitz einer Stereo-CD und hat von einem bestimmten Musikstück daher den linken und den rechten Kanal. Mit dem Aufkommen der Mehrkanaltechnik, wie beispielsweise, der 5.1-Technik, kann der Benutzen nun den Wunsch haben, auf seiner neuen Surround-Anlage nicht nur seine Stereo-CD abzuspielen, sondern eine 5-Kanal-Version seiner Stereo-CD zu haben und abzuspielen. In diesem Fall würde es genügen, dem Benutzer, der bereits den linken und rechten Kanal hat, lediglich den linken Surround-Kanal, den rechten Surround-Kanal und den Center-Kanal zu übertragen. In dem beschriebenen Szenario, in dem die Menge an übertragenen Daten abgerechnet wird, würde sich ein Benutzer bereits 40% der Datenmenge sparen, wenn er sich nur 3 Kanäle anstatt 5 Kanäle schicken lässt.

Des weiteren ist der Zukauf von den Erweiterungsdaten für den Nutzer möglicherweise wirtschaftlich attraktiver, da er für bereits vorhandene Audio-Basisdaten nicht erneut bezahlen muss. So könnte eine Plattenfirma, die bereits eine Stereo-CD verkauft hat, als Zusatz-Service für Ihre Kunden, die "Surround"-Erweiterung zu einem billigeren Preis anbieten, als die komplette 5-Kanalversion eines Musikstücks.

Die Verwendung von Zusatzdaten für bereits bestehende Daten kann jedoch auch für verschiedene andere Anwendungen von hohem Interesse sein. Insbesondere in dem Bereich der skalierbaren Audio-/Videodaten könnten Zusatzdaten in einer höheren Skalierungsschicht bestehen. In dem in der Technik bekannten Skalierbarkeits-Konzept existiert z. B. von einem Audiostück eine Basisskalierungsschicht, die das Audio-Signal bis zu einer bestimmten Bandbreite, wie beispielsweise 8 kHz, umfasst. Ein Abspielgerät, das z. B. nur diese maximale Bandbreite von 8 kHz wiedergeben kann, ist mit solchen Daten voll und ganz ausgelastet. Das Abspielgerät könnte zum Beispiel ein Player sein, der keine besonders breitbandigen Lautsprecher hat. Genauso könnte dieses Signal auch nach unten bandbegrenzt sein so dass der Player auch keine Töne unter z. B. 500 Hz wiedergeben kann. Die nächsthöhere Skalierungsschicht könnte die nach unten fehlende Bandbreite und/oder die nach oben fehlende Bandbreite sein, wie beispielsweise die Bandbreite von 20 Hz - 500 Hz und die Bandbreite von 8 kHz - 16 kHz. Diese erste Skalierungssicht wäre dann mit dem ursprünglichen Audiosignal, dessen Bandbreite zwischen 500 Hz und 8 kHz liegt, zu kombinieren, um ein breitbandiges Audiosignal zu erhalten, das dann durch ein breitbandiges Wiedergabegerät wiedergegeben werden kann. Auch diese Skalierungsschicht-Variante könnte durchaus von einem Anbieter, derart bereit gestellt werden, dass die erste Skalierungssicht für einen Nutzer weniger kostet als das breitbandige Audiosignal, da der Benutzer das "schmalbandige" Audiosignal bereits vorher kostenpflichtig bezogen hat.

Weitere Erweiterungsdaten bestehen in Videodaten, bei denen die Basisschicht eine Videosequenz mit einer bestimmten Auflösung liefert, während die nächste Skalierungsschicht Videodaten liefert, die bereits selbst eine höhere Auflösung haben, oder die, wenn sie mit den ursprünglichen Videodaten kombiniert werden, in einer Videosequenz mit höherer Auflösung resultieren. Ein solches Szenario ist dann gegeben, wenn ein Benutzer nur ein Video-Wiedergabegerät mit einer geringeren Auflösung hat und dann später ein Video-Wiedergabegerät mit höherer Auflösung erhält und seine "alten" Videos mit der durch sein neues Gerät möglich gemachten höheren Auflösung ansehen möchte.

Weitere Erweiterungsdaten bestehen auch in so genannten SBR-Daten (SBR = Spectral Band Replication = Spektralbandreplikation). In der bekannten SBR-Technik erzeugt ein Codierer aufgrund einer zur Verfügung stehenden niedrigen Ausgangsdatenrate nur ein bandbegrenztes Signal, das sich nur bis zu einer maximalen Grenzfrequenz von z. B. 4 oder 6 kHz erstreckt. Die Daten für das fehlende hohe Band werden nicht mehr als Audio-Abtastwerte oder Audio-Spektralwerte codiert sondern als parametrische Daten. Bei der SBR-Technik sind dies parametrische Dateninformationen über die spektrale Hüllkurve (Spectral Envelope). Ein SBR-Decodierer wird dann Spektralwerte aus dem zur Verfügung stehenden Band in ein höheres Band kopieren und damit eine spektrale Feinstruktur des höheren Bandes festlegen, während die spektrale Grobstruktur also der Spectral Envelope durch die parametrischen Zusatzdaten bestimmt wird. Je nach Implementierung könnte ein Benutzer daher seine bereits bestehenden bandbegrenzten codierten oder uncodierten Audiodaten entweder aufgrund der übertragenen SBR-Parameter oder bereits aufgrund von zeitlichen Audio-Abtastwerten, die nur das hohe Band umfassen, zu einem breitbandigen Audio-Signal ergänzen.

Auch bei der Mehrkanal-Audiowiedergabetechnik, die wenigstens 3 Wiedergabekanäle hat, wie beispielsweise Links, Rechts und Center, werden zunehmend parametrische Techniken eingesetzt, die auch unter dem Stichwort BCC-Technik bekannt sind. Bei der BCC-Technik werden einer oder zwei Basiskanäle verwendet, um unter Verwendung von parametrischen Zusatzdaten eine prinzipiell beliebige Anzahl von Wiedergabekanälen, wie beispielsweise 5 Kanäle in der Surround-Wiedergabetechnik, zu erzeugen. Die parametrischen Daten sind hier Zwischenkanal-Pegeldifferenzen (ICLD; ICLD= inter channel level differences), Zwischenkanal-Zeitdifferenzen (inter channel time differences) oder Zwischenkanal-Kohärenzinformationen (ICC; ICC= inter channel coherence).

Diese parametrischen Daten werden auf die übertragenen Stereo-Basiskanäle angewendet, um durch verschiedene Gewichtungen/Kombinationen der zwei Basiskanäle die Wiedergabekanäle zu erzeugen.

Auch in diesem Szenario könnte ein Benutzer, der bereits im Besitz der beiden Stereokanäle eines Musikstücks ist, ein Interesse haben, entweder die Parameterdaten "zuzukaufen", die natürlich nur sehr geringe Datenraten in Anspruch nehmen. In diesem Fall müsste ein Empfänger jedoch über einen BCC-Decodierer verfügen, um mit den parametrischen Daten etwas anfangen zu können. Alternativ könnte jedoch auch ein Dienstanbieter aufgrund der parametrischen Daten die 3 Kanäle Left-surround, Right-surround und Center aus solchen parametrischen Daten und bei ihm vorliegenden (idealen) Versionen der beiden Stereobasiskanäle erzeugen und gewissermaßen "decodiert", also als Audiodaten, die nicht parametrische Daten sind, zum Empfänger schicken.

Ähnliche Mehrkanal-Codiertechniken unter Verwendung parametrischer Daten sind auch unter dem Stichwort "Intensity-Stereo-Codierung" bekannt.

Das zeitsynchrone Hinzufügen von insbesondere zeitkontinuierlichen Erweiterungsdaten an zeitkontinuierliche Audio-Basisdaten, wobei die zeitkontinuierlichen Erweiterungsdaten bereits z. B. aus parametrischen Daten erzeugt worden sind, führt zu einer Reihe von praktischen Problemen, die für eine erfolgreiche Anwendung gelöst werden müssen.

Für alle Erweiterungsdaten sollte sicher gestellt werden, dass diese exakt zu dem Partner unter der großen Menge verschiedener Audio-Basisdaten passen, für den sie entworfen, erzeugt oder berechnet worden sind. Dies wird insbesondere dadurch erschwert, dass die Basisdaten per se über keine eindeutige Kennung verfügen, an Hand derer sie identifiziert oder gar einem eindeutigen Partner zugeordnet werden können. Beispielhaft sollen Mehrkanalzusatzdaten Dx eines Musikstücks X nur zu diesem Musikstück X hinzugefügt werden und nicht zu einem anderen Musikstück Y oder einem so genannten Remix "XR" des selben Musikstückes X. An dieser Stelle wird darauf hingewiesen, dass es insbesondere im Bereich der Pop-Rock-Musik immer mehrere Versionen eines Stücks gibt, so können diese Versionen Langversionen für eine CD, Kurzversionen für eine Single, Live-Versionen oder die sogenannten Neuauflagen oder Remix-Versionen sein. Aber auch im Bereich der klassischen Musik existiert für ein und dasselbe Stück eine Vielzahl von Interpretationen, die allein dadurch entstehen, dass ein Stück von verschiedenen Orchestern aufgenommen worden ist. So ist es selbstverständlich, dass Mehrkanalzusatzdaten einer Aufnahme eines klassischen Stücks vom Orchester X natürlich nicht zu der Aufnahme desselben klassischen Stücks vom Orchester Y passen werden.

Eine weitere Problematik besteht darin, dass dafür gesorgt werden muss, dass die Audio-Basisdaten präzise zeitsynchron zu den Erweiterungsdaten passen und umgekehrt. Ist dies nicht der Fall, so sind in den meisten Fällen die Erweiterungsdaten für den Nutzer wertlos. Bereits wenn die Mehrkanalzusatzinformationen eines Musikstücks einen minimalen Versatz zu den Stereobasisdaten haben, treten deutlich hörbare Artefakte im Klangbild auf und der Nutzer hat damit lediglich eine fehlerhafte Mehrkanalversion des Musikstücks, die im Extremfall nicht mehr nutzbar ist.

Audio-Basisdaten können auch in verkürzter Form vorliegen. Soll beispielsweise ein Dienstanbieter für eine Mehrkanalerweiterung von bestehenden Stereosignalen sorgen, soll er also die Mehrkanalzusatzdaten erzeugen, so sollte er einen Zugriff auf eine Mehrkanalversion des Musikstücks haben. Der Nutzer des Dienstes, der die Mehrkanalzusatzinformationen wünscht, besitzt ebenfalls eine Version des Musikstücks, nämlich eine Stereoversion. Hat der Endanwender bei der Erstellung bzw. Verarbeitung, beispielsweise beim Einlesen einer CD, von den Audiodaten absichtlich oder unabsichtlich Teile des Anfangs oder des Endes entfernt, so decken die Mehrkanalversion des Dienstanbieters und die Stereoversion des Endanwenders nicht mehr den gleichen Audiobereich ab. Auch solche Situationen sollen, sofern sie auftreten, beim Hinzufügen der Mehrkanalzusatzdaten berücksichtigt werden.

Sind die Audiobasisdaten ferner zeitlich gedehnt oder gestaut, wurden sie also schneller oder langsamer aufgezeichnet/abgespielt, so führt dies ebenfalls zu Problemen bei der Hinzufügung. Hier müsste der korrekte Stauchungs/Dehnungsfaktor ermittelt werden, welcher dann für die Erweiterungsdaten in gleicher Weise verwendet werden sollte. Hat der Endanwender seine Stereoversion zum Beispiel aus dem Radio aufgenommen, so kann es sein, dass diese bis zu 3% schneller oder langsamer abgespielt wurde. Dementsprechend besitzt der Endanwender nun eine gedehnte/längere bzw. gestauchte/kürzere Version des Musikstücks, was ebenfalls auch für die Mehrkanalzusatzdaten eine Relevanz haben wird.

Ferner sollten alle genannten Daten auch dann bestimmt werden können, wenn das Audiobasissignal nicht mehr in seiner ursprünglichen Form vorliegt, sondern in gewissen Grenzen durch die Übertragung, beispielsweise durch eine Audiocodierung, verändert wurde. Ist die Stereoversion des Endanwenders von einem analogen Kassettenrecorder überspielt worden, so hat sich dadurch das Musikstück quantitativ verändert (verschlechtert). Selbst unter diesen (schwierigeren) Bedingungen, sollte das Hinzufügen der Mehrkanalzusatzdaten prinzipiell ebenfalls funktionieren.

Insbesondere sei darauf hingewiesen, dass man in der Technik unter "Kürzung" die Entfernung von Daten z. B. am Anfang oder am Ende eines Stückes versteht. Der englische Fachausdruck hierfür ist "cropping". Unter "Stauchung" versteht man dagegen eine lineare Verzerrung der Zeitachse, beispielsweise durch schnellere Wiedergabe, was im Bereich der Digitaltechnik einem "Resampling" entspricht, d. h. der Umsetzung auf eine geänderte Abtastfrequenz. Analog bedeut die "Verlängerung" eine Hinzufügung von Daten, während die "Dehnung" eine lineare Verzerrung der Zeitachse in umgekehrter Richtung, also eine langsamere Wiedergabe, bedeutet.

Aus der Technik, insbesondere auch aus der Kino-Video-Technik, sind Zeitsynchronisierungsverfahren bekannt, bei denen typischerweise auf Time-Code-Standards, die auch Time-Stamps bezeichnet werden, zurückgegriffen wird. Durch korrekt aufeinander abgestimmte Zeitcodes sowohl im Video-Material als auch im Audio-Material, wird sichergestellt, dass zu einer Sequenz von Bildern auch der dazu passende Ton abgespielt wird. Solche Zeitcodes ermöglichen die Synchronisation von Audio- und Videodaten sowie Multimediadaten. Sie sind jedoch üblicherweise in Consumer-Audio-Formaten nicht vorhanden. Eine CD, die eine Stereoversion eines Stückes enthält, enthält keine eindeutig standardisierten bzw. allgemein anerkannten Zeitcodes. Auch für die "Anreicherung" von üblichen Video-Sequenzen mit Zusatzinformationen, um eine höher aufgelöste Videosequenz zu erhalten, existieren keine allgemein anerkannten Zeitsynchronisationstechnologien.

Daher gelingt bisher die Hinzufügung von Zusatzinformationen zu Basisinformationen sowohl im Audio- als auch Video-Bereich, nur dann, wenn sowohl die Basisdaten als auch die Zusatzdaten in "einem Guss" erzeugt worden sind, wie beispielsweise dann, wenn ein BCC-Encodierer BCC-Parameter aufgrund einer Mehrkanalversion erzeugt, wobei eine BCC-Decodierung nur auf der Basis der von dieser Mehrkanalversion abgeleiteten Basiskanäle erfolgen kann, nicht jedoch unter Verwendung von beliebigen Basiskanälen. Ähnlich ist die Situation bei skalierbaren Codierern oder bei SBR-Systemen. Hier wird ebenfalls "aus einem Guss" gearbeitet, da SBR-Zusatzdaten oder höhere Skalierungsschichten nur genau zu einer Basisskalierungsschicht bzw. einem Low-Band-Signal passen, das bei der Erzeugung der Daten bereits zur Verfügung gestanden haben muss. Für beliebige Basisdaten, wie sie bei einem Benutzer vorliegen können und von dem Benutzer bereits gewollt oder ungewollt (Qualitätsverschlechterung) manipuliert worden sind, funktionieren solche Konzepte, die nach dem Prinzip des "einen Gusses" arbeiten, bereits per Definition nicht.

Rolf Bardeli und Frank Kurth zeigen in "Robust Identification of Time-Scaled Audio", AES 25Th conference, London/UK, June 2004, ein Verfahren zur robusten Identifikation von Audiosignalen auf, die z.B. von Rundfunksendern ausgestrahlt werden. Die Identifikation solcher Signale wird erschwert dadurch, dass beispielsweise gleiche Musikstücke in unterschiedlichen Geschwindigkeiten abgespielt werden. Die Autoren schlagen eine Identifikationsverfahren vor, das auch die Identifikation skalierten Audiosignalen erlaubt, d.h. beispielsweise von Musikstücken, die mit unterschiedlicher Geschwindigkeit abgespielt wurden.

Die Aufgabe der vorliegenden Erfindung besteht darin, ein praktikable und robustes Konzept zum Synchronisieren von Zusatzdaten und Basisdaten zu schaffen.

Diese Aufgabe wird durch eine Vorrichtung zum Synchronisieren gemäß Patentanspruch 1, eine Client-Vorrichtung gemäß Patentanspruch 12, ein Verfahren zum Synchronisieren gemäß Patentanspruch 15, ein Verfahren zum Betreiben einer Client-Vorrichtung gemäß Patentanspruch 16, oder ein Computer-Programm gemäß Patentanspruch 17 gelöst.

Der vorliegenden Erfindung liegt die Erkenntnis zu Grunde, dass das Synchronisieren von Zusatzdaten und Basisdaten dann gelingen kann, wenn auf die bereits zur Audio-Identifikation eingesetzte Fingerabdruck-(Fingerprint-) Technologie zurückgegriffen wird. Nachdem ein Benutzer einen Fingerabdruck seiner Basisdaten, zu denen er Erweiterungsdaten wünscht, bereitgestellt hat, kann ein Anbieter solcher Zusatzinformationen eindeutig identifizieren, um welches Stück der Audiobasisdaten es sich handelt, also von welchem Interpreten und aus welchem Aufnahmejahr etc.

Insbesondere sind existierende Fingerprint-Technologien derart ausgereift, dass sie sowohl robust gegenüber Verzerrungen durch Qualitätsverschlechterungen oder verlustbehaftete Codierungen sind als auch so charakteristisch sind, dass ein Fingerabdruck einer Live-Version eindeutig von einem Fingerabdruck einer Studioversion oder z. B. von einem Fingerabdruck einer verkürzten Single-Version unterscheidbar ist.

Nach erfolgter Identifikation des Stückes, die prinzipiell auch durch Klartextübertragung zwischen dem Nutzer und dem Anbieter stattfinden könnte, obgleich diese Vorgehensweise oftmals aufwändig ist, wird ein Test-Fingerabdruck von Testdaten, der sich auf einen Testzeitpunkt der Testdaten bezieht, bereitgestellt. Hierbei wird die Eigenschaft moderner Fingerprint-Technologien ausgenutzt, die nicht nur allgemein eine Identifikation eines Stückes liefern, sondern die sich auch auf bestimmte Zeitpunkte eines Stücks beziehen können. In der Technik bezeichnet man solche Fingerabdrücke auch als "Fingerabdrücke mit interner Zeitskala", wenn sich ein Fingerabdruck von Testdaten auf einen Testzeitpunkt der Testdaten bezieht.

In den Referenzdaten, die beispielsweise die beim Benutzer vorhandenen Basisdaten sein können, wird dann eine Referenzzeitpunktinformation bestimmt, die von einem Referenzzeitpunkt in den Referenzdaten abhängt, wobei diese Bestimmung unter Verwendung des Testfingerabdrucks durch übliche Fingerabdruck-Verarbeitungs-Technologien geschieht. Typischerweise wird ein solches "Fingerabdruck-Abgleich-System" den Testfingerabdruck gewissermaßen über die zeitlichen Referenzdaten so lange schieben, bis eine maximale Übereinstimmung vorzugsweise des Test-Fingerabdrucks und eines von den Referenzdaten abgeleiteten Referenzfingerabdrucks erhalten wird. Der Zeitpunkt in den Referenzdaten, bei dem die optimale Übereinstimmung aufgrund des Testfingerabdrucks erhalten worden ist, wird dann mit dem Testzeitpunkt übereinstimmen, auf den sich der Testfingerabdruck bezieht. Damit ist eine Synchronisationsstelle zwischen den Testdaten und den Basisdaten erreicht.

Auf der Basis dieser Referenzzeitpunktinformationen und der Testzeitpunktinformationen, die von dem Testzeitpunkt abhängen, wird schließlich eine Manipulation der Zusatzdaten oder der Basisdaten, jedoch vorzugsweise lediglich der Zusatzdaten vorgenommen, um manipulierte Daten zu erhalten, wobei die Manipulation derart stattfindet, dass die Zusatzdaten oder die Basisdaten so manipuliert werden, dass eine synchrone Wiedergabe der Dateninformationen aufgrund der manipulierten Daten durchführbar ist.

Eine Form der Manipulation wird vorzugsweise im Bestimmen eines Anfangs-Versatzes oder End-Versatzes bestehen, um Verkürzungen in den Basisdaten vornehmen zu können. Eine andere Manipulation wird darin bestehen, dass ein Stauchungs-/Dehnungsfaktor berücksichtigt wird, um dann die Basisdaten oder die Zusatzdaten, jedoch vorzugsweise die Zusatzdaten, ebenfalls so zu stauchen/dehnen, dass sie genau zu den (gedehnten/gestauchten) Basisdaten passen.

Damit wird eine zeitsynchrone Wiedergabe aller Informationen, also sowohl der Informationen in den Zusatzdaten als auch der Informationen in den Basisdaten erreicht und zwar unabhängig davon, ob aus den Zusatz- und den Basisdaten eine einzige Audiodatei geschrieben wird, oder ob die manipulierten Zusatzdaten beispielsweise in einer eigenen Daten abgelegt werden, die nunmehr mit einem eindeutigen Zeitbezug auf die Basisdaten versehen ist und somit auf die Basisdaten "maßgeschneidert" ist.

Während im ersten Fall die manipulierten Daten die komplett neu geschriebene Audiodatei umfassen, sind im letzteren Fall die manipulierten Daten lediglich zum Beispiel die manipulierten Zusatzdaten, während die Basisdaten auf Seiten des Benutzers nicht extra abgetastet werden. Die zweite Variante ist dann vorteilhaft, wenn ein Benutzer auf jeden Fall sicherstellen möchte, dass seine Basisdaten, die für ihn wertvoll sind und die er lieb gewonnen hat, keineswegs angetastet werden. Nachteilig an dieser Situation ist jedoch, dass der Benutzer ein Wiedergabegerät braucht, das vor der Wiedergabe, also der Ausgabe über Lautsprecher, die beiden Datenströme zusammenführt.

Diese Anforderung wird an einen Benutzer nicht gestellt, der die Basisdaten und die Zusatzdaten gleich in eine einzige Datei zusammenführt, die dann von einem üblichen Wiedergabegerät wiedergegeben werden kann.

Natürlich kann der Benutzer im ersten Fall auch eine Kopie seiner Audiobasisdaten behalten und dennoch die Basisdaten und die Zusatzdaten in eine einzige Datei zusammenführen, so dass er eine Stereoversion und gleichzeitig eine 5.1-Version zur Verfügung hat.

Ferner sei darauf hin gewiesen, dass die Zusatzdaten nicht unbedingt zeitliche Abtastwerte sein müssen, sondern auch Parameterdaten sein können. Wenn die Zusatzdaten Parameterdaten sind, wird die Manipulation der Zusatzdaten darin bestehen, dass den Zusatzdaten eindeutige Synchronisationsinformationen, die sich auf die Basisdaten beziehen, zugeordnet werden, welche z. B. Zeitcodes oder auch wieder Fingerabdrücke sein können, so dass ein Multikanal-Decodierer unter Verwendung der nunmehr mit Synchronisationsinformationen versehenen BCC-Parameter oder von den Parametern abgeleiteten zeitdiskreten digitalen Audiodaten eine Multikanal-Rekonstruktion durchführen kann, die genau auf die vorhandenen Basisdaten bezogen ist. Insbesondere wird eine Manipulation von z. B. blockweise vorliegenden Parametern auch in einem Abschneiden von Parameterinformationen zu Anfang oder zu Ende der Zusatzdaten bestehen, um möglicherweise von einem Benutzer absichtlich oder unabsichtlich eingeführte Verkürzungen am Anfang oder am Ende der Basisdaten zu berücksichtigen.

An dieser Stelle sei darauf hingewiesen, dass solche Manipulationen insbesondere dann auftreten, wenn ein Benutzer Audio/Video Informationen selbst aufzeichnet oder von seiner eigenen CD/DVD kopiert, da es in beiden Fällen schwierig wenn nicht unmöglich ist, genau den Anfang oder das Ende eines Stücks, wie es vom Studio ausgegeben worden ist, "zu erwischen". Dies ist insbesondere am Ende des Stücks problematisch, wenn ein Stück ausgeblendet wird. Auch der Anfang eines Stückes ist insbesondere bei einer Aufzeichnung vom Radio schwer zu finden. Hier ist nicht eindeutig bestimmbar, ob das Stück mit einer Pause beginnt und wie lang diese Pause ist, oder ob das Stück tatsächlich mit einem ersten Trommelschlag beginnt, was den Benutzer vor Schwierigkeiten stellt, da er die Aufnahmetaste genau gleichzeitig mit dem Trommelschlag drücken müsste.

Auch die Problematik der Stauchung/Dehnung ist in realen Situationen sehr evident, da nahezu keine analogen Wieder-gabegeräte/Aufzeichnungsgeräte existieren, die mit vollkommen identischer Geschwindigkeit laufen. Auch bei digitalen Wiedergabe/Aufzeichnungs-Geräten hängt eine synchrone Wiedergabe letztendlich am Taktoszillator des Wiedergabegerätes, der mehr oder weniger genau sein wird und dessen Qualität insbesondere in Richtung des preisgünstigen Endes der Angebotsskala abnimmt. Andererseits ist jedoch gerade das preisgünstige Ende der Angebotsskala das Marktsegment, das wirtschaftlich am interessantesten ist, da naturgemäß dort angesiedelte Geräte die größten Stückzahlen haben werden.

Bevorzugte Ausführungsbeispiele der vorliegenden Erfindung werden nachfolgend bezugnehmend auf die beiliegenden Zeichnungen detailliert erläutert. Es zeigen:

Fig. 1 ein Blockschaltbild des erfindungsgemäßen Konzepts zum Synchronisieren von Zusatzdaten und Basisdaten;

Fig. 2 ein Flussdiagramm eines bevorzugten Anwendungsfalls, bei dem ein Client mit einem Server kommuniziert;

Fig. 3 eine schematische Darstellung eines Fingerabdrucksystems, bei dem sich ein Fingerabdruck auf einen Zeitpunkt von Daten bezieht, von denen der Fingerabdruck stammt;

Fig. 4 eine schematische Darstellung der Bestimmung von Referenzzeitpunkt-Informationen unter Verwendung eines Testfingerabdrucks;

Fig. 5 eine schematische Darstellung der Bestimmung einer Stauchung/Dehnung unter Verwendung von zwei Testfingerabdrücken gemäß einem bevorzugten Ausführungsbeispiel der vorliegenden Erfindung;

Fig. 6 eine Übersichtsdarstellung von Schritten zum Manipulieren von Zusatzdaten gemäß einem bevorzugten Ausführungsbeispiel der vorliegenden Erfindung;

Fig. 7 eine schematische Darstellung einer Serverdatenbank, wie sie bei einem bevorzugten Ausführungsbeispiel der vorliegenden Erfindung erforderlich ist; und

Fig. 8 ein Systemdiagramm der Kommunikation zwischen einem Server und einem Client gemäß einem bevorzugten Ausführungsbeispiel der vorliegenden Erfindung.

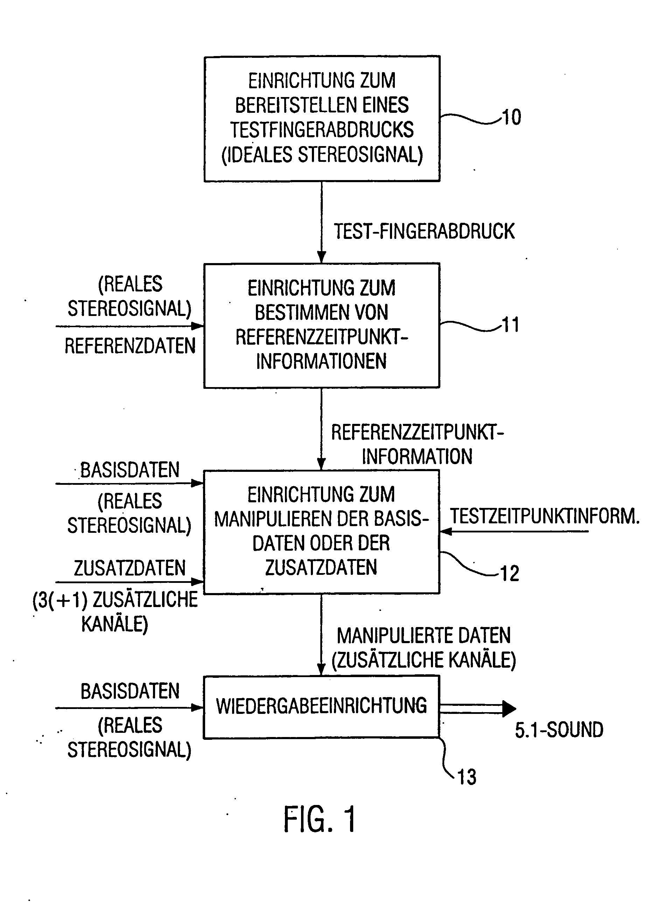

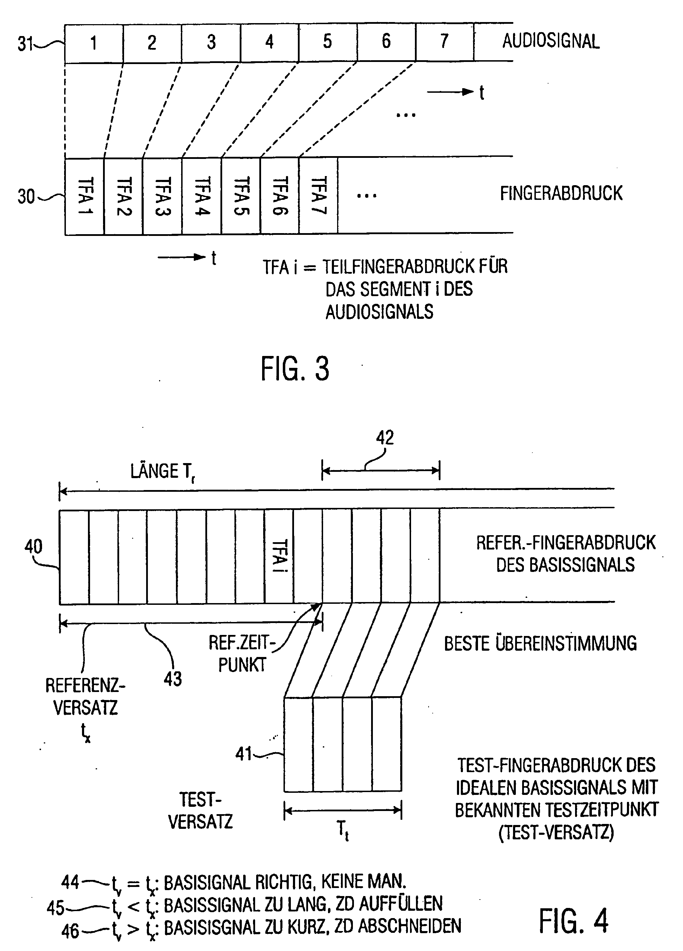

Bevor an Hand von Fig. 1 auf die erfindungsgemäße Vorrichtung zum Synchronisieren von Zusatzdaten und Basisdaten Bezug genommen wird, wird zunächst an Hand von Fig. 3 ein Fingerabdruck beschrieben, der sich auf einen Zeitpunkt oder mehrere Zeitpunkte der Daten bezieht, von denen er abgeleitet worden ist, der also ein Fingerabdruck mit interner Zeitskala ist. Anders ausgedrückt liefert der Fingerabdruck 30 in Fig. 3 eine Zeitskala des Audiosignals 31 in Fig. 3, von dem er abgeleitet worden ist. So ist die zeitliche Struktur des Audiosignals 31 auch mit der zeitlichen Struktur des Fingerabdrucks 30 in Einklang. Der zeitliche Verlauf des Fingerabdrucks 30 korrespondiert somit mit dem zeitlichen Verlauf des Audiosignals 31.

Das Audiosignal 31 umfasst bei dem in Fig. 3 gezeigten Beispiel eine Folge von zeitlichen Segmenten 1, 2, 3,..7. Von jedem zeitlichen Segment wird ein einzelner Teilfingerabdruck TFAi durch ein bekanntes Fingerabdruckverfahren berechnet. So korrespondiert der Teilfingerabdruck TFA1 mit dem Segment 1 des Audiosignals, während z. B. Teilfingerabdruck TFA6 mit dem Segment 6 des Audiosignals korrespondiert. Allgemein steht ein Teilfingerabdruck TFAi mit einem Segment i des Audiosignals in Zusammenhang.

Eine beispielhafte Fingerabdruckberechnungsstrategie besteht darin, das Audiosignal zu fenstern, um beispielsweise das Segment 1 des Audiosignals "herauszuschneiden", das aus einer Anzahl von z. B. 2048 zeitlichen Abtastwerten bestehet. Hierauf wird eine Umsetzung des Blocks von zeitlichen Abtastwerten, welcher das erste Segment des Audiosignals darstellt, in den Spektralbereich vorgenommen um eine spektrale Darstellung zu erhalten, die beispielsweise 2048 Spektral-Koeffizienten umfast. Zur Reduktion der Daten wird hierauf eine Gruppierung der Spektral-Koeffizienten in verschiedene Bänder vorgenommen, um dann verschiedene Merkmale oder "Features" aus jedem Spektralband zu extrahieren. Solche Features sind beispielsweise ein Tonalitätsmaß, ein Lautheitsmaß, die sogenannten Mel-Frequenz-Spektral-Koeffizienten, die Audio-Spektralkurve (Audio Spectral Envelope) oder andere statistische Größen, wie beispielsweise Mittelwert oder Varianz der Spektralkoeffizienten in einem Band oder auch statistische Momente höherer Ordnung. Je nach Finger Printing- Technologie wird dann eine Weiterverarbeitung dieser "Rohmerkmale" durchgeführt, um schließlich einen Teilfingerabdruck TFA1 des ersten Segments des Audiosignals zu erhalten.

Der Teilfingerabdruck TFA1 des ersten Segments hat dann eine Datenmenge, die im Vergleich zur durch das erste Segment selbst bedingten Datenmenge reduziert ist. Andererseits ist der Teilfingerabdruck TFA 1 für das erste Segment charakteristisch. Er enthält also die Informationen dieses Segments, die zur Identifikation dieses Segments erforderlich sind. Identifikation bedeutet in diesem Zusammenhang, dass an Hand dieses Teilfingerabdrucks TFA1 das erste Segment des Audiosignals von einem anderen Segment des Audiosignals oder von einem Segment eines anderen Audiosignals mit guter Wahrscheinlichkeit unterschieden werden kann.

Nachdem dieses Prozedere für das gesamte Audiosignal 31 durchgeführt worden ist, erhält man den Fingerabdruck des Audiosignals, der aus einer Aneinanderreihung von einzelnen Teilfingerabdrücken besteht.

An dieser Stelle sei darauf hingewiesen, das Fig. 3 lediglich beispielhaft ist, um einen Fingerabdruck darzustellen, der eine interne Zeitskala hat, dessen zeitlicher Verlauf also mit dem zeitlichen Verlauf des Audiosignals korrespondiert. So müssen die Segmente nicht wie in Fig. 3 gezeigt voneinander abgegrenzt sein, sondern sie können auch z. B. überlappend sein, also z. B. eine 50%-Überlappung haben, wie sie aus der Audiocodiertechnik bekannt ist. Darüber hinaus können die einzelnen Teilfingerabdrücke TFAi miteinander noch einmal verrechnet sein, z. B. durch Mittelwertbildung, solange der resultierende Fingerabdruck 30 noch einen zeitlichen Zusammenhang zum Audiosignal hat, also solange sich der Fingerabdruck auf einen Zeitpunkt in den Daten bezieht. Bei dem in Fig. 3 gezeigten Ausführungsbeispiel bezieht sich der Teilfingerabdruck TFA1 auf den Zeitpunkt am Beginn des ersten Segments, während sich der Teilfingerabdruck TFA6 auf den Zeitpunkt am Beginn des sechsten Segments bezieht. Es sei darauf hingewiesen, dass diese Zuordnung lediglich beispielhaft ist. Falls etwas entsprechendes vereinbart ist, kann sich ein Teilfingerabdruck auch auf ein Ende eines Segments oder auf irgendeinen bekannten Wert innerhalb des Segments, beispielsweise auf die Mitte des Segments, beziehen.

Nachfolgend wird an Hand von Fig. 4 eine bevorzugte Technik zur Bestimmung von Referenzzeitpunkt-Informationen vorgestellt. Bei dem in Fig. 4 gezeigten Ausführungsbeispiel liegt der Referenz-Fingerabdruck z. B. des Basissignals, der in Fig. 4 mit 40 bezeichnet ist, in einer solchen Form vor, wie sie an Hand von Fig. 3 für den Fingerabdruck 30 beschrieben worden ist. Für die in Fig. 4 gezeigte beispielhafte Darstellung bezieht sich der Referenzfingerabdruck des Basissignals auf ein Basissignal mit der Länge Tr. Ferner ist in Fig. 4 ein Test-Fingerabdruck 41 gezeigt, der ebenfalls aus einzelnen Teilfingerabdrücken besteht und prinzipiell genauso aufgebaut sein kann, wie der Fingerabdruck 30 von Fig. 3. Der Testfingerabdruck bezieht sich auf ein Testsignal, das, wie es in Fig. 4 angedeutet ist, eine Länge $T_t$ hat. Ferner hat der Test-Fingerabdruck 41 zeitliche Informationen dahingehend, dass er sich auf einen TestZeitpunkt bzw. Test-Versatz $t_v$ des Testsignals bezieht. Um die Funktionalität von Fig. 4 darzustellen, sei das Testsignal, von dem der Test-Fingerabdruck abgeleitet worden ist, der Ausschnitt des Basissignals, der in Fig. 4 mit 42 bezeichnet ist. Wird nunmehr eine zeitliche Korrelation des Test-Fingerabdrucks mit dem Referenz-Fingerabdruck vorgenommen, so wird für jeden Zeitschritt eine Korrelation zwischen dem Testfingerabdruck und dem Referenzfingerabdruck vorgenommen. Man könnte beispielsweise damit starten, dass man die ersten 5 Teilfingerabdrücke des ReferenzFingerabdrucks mit den 5 Teilfingerabdrücken des Testfingerabdrucks vergleicht. Diese Korrelation wird zu einem bestimmten Übereinstimmungsmaß führen. Hierauf wird in einem nächsten Schritt der zweite bis sechste Teilfingerabdruck des Referenzfingerabdrucks mit den 5 Teilfingerabdrücken des Testfingerabdrucks verglichen, wobei wieder ein Übereinstimmungsmaß erhalten wird. Dies wird so lange durchgeführt, bis die 5 Teilfingerabdrücke des Referenzsignals, die bei dem in Fig. 4 eingezeichneten Referenzzeitpunkt beginnen, mit den 5 Teilfingerabdrücken des Testfingerabdrucks verglichen werden. Hier wird sich eine sehr hohe Übereinstimmung bzw. bei dem beispielhaften Fall, bei dem das Testsignal ein Ausschnitt des Basissignals ist, eine 100%-Übereinstimmung ergeben. Der Fingerabdrucküberprüfungs-Algorithmus wird somit Referenzzeitpunkt-Informationen ausgeben, die entweder den absoluten Referenzzeitpunkt umfassen oder einen relativen Referenzzeitpunkt umfassen, der auch als Referenzversatz $T_x$ 42 in Fig. 4 dargestellt ist.

In dem beschriebenen Beispiel wird der Fingerabdruck-Algorithmus somit das Übereinstimmungsmaß und den Referenzversatz Tx ausgeben. Erfindungsgemäß wird dieses Merkmal des Fingerabdrucküberprüfungs-Algorithmus dahingehend verwendet, dass nunmehr ein Test-Versatz $t_v$ bzw. allgemein gesagt Testzeitpunkt-Informationen mit dem Referenzversatz bzw. den Referenzzeitpunktinformationen verglichen werden. Der Testversatz $t_v$ ist vorn vornherein bekannt, da der Test-Fingerabdruck von dem Abschnitt 42 des Basissignals zu einem bestimmten Zeitpunkt abgeleitet worden ist.

Im ersten Fall 44 der in Fig.4 gezeigten Fallunterscheidung, der auf das gewählte Beispiel zutreffen würde, wird man feststellen, dass der Test-Versatz $t_v$ gleich dem Referenz-Versatz $t_x$ ist. Dies bedeutet, dass das Basissignal dahingehend richtig ist, dass es denselben Anfang wie das Referenzsignal hat. Auf die weiteren Fälle 45 und 46, bei denen das Testsignal nicht mit dem Referenzsignal bzw. Basissignal übereinstimmt, bei dem also eine Verlängerung oder Verkürzung des Basissignals im Vergleich zum Testsignal, von dem der Testfingerabdruck abgeleitet ist, vorhanden ist, wird später eingegangen.

In einfachen Fall, bei dem das Testsignal direkt ein Ausschnitt des Referenzsignals ist, stellt sich die Situation somit folgendermaßen dar: ein Referenzsignal Sr hat beispielsweise die Länge von 200 Sek. Als Testsignal St wird ein Ausschnitt 42 aus dem Referenzsignal gewählt, der bei Sekunde 42 (Referenzzeitpunkt) beginnt und eine Länge ($T_t$) von 10 Sekunden hat. Jetzt wird von beiden Signalen ein Fingerprint berechnet, und zwar so, wie es an Hand von Fig. 3 dargestellt worden ist. Allgemein kann jedoch auch auf beliebige bekannte Art und Weise ein Fingerabdruck berechnet werden, so lange er einen zeitlichen Verlauf hat, der mit dem zeitlichen Verlauf des Signals, aus dem er berechnet worden ist, korrespondiert. Mit Hilfe dieser Fingerprints und eventuell optional weiterer z. B. in einer Referenzfingerprint-Datenbank gespeicherten Fingerprints wird das Audio-Fingerprinting-System bei der Verarbeitung, wie sie an Hand von Fig. 4 dargestellt worden ist, neben der Zuordnung zu dem genannten Referenzsignal Sr als weitere Information einen zeitlichen Versatz $T_{off}$ von ca. 82 Sekunden liefern.

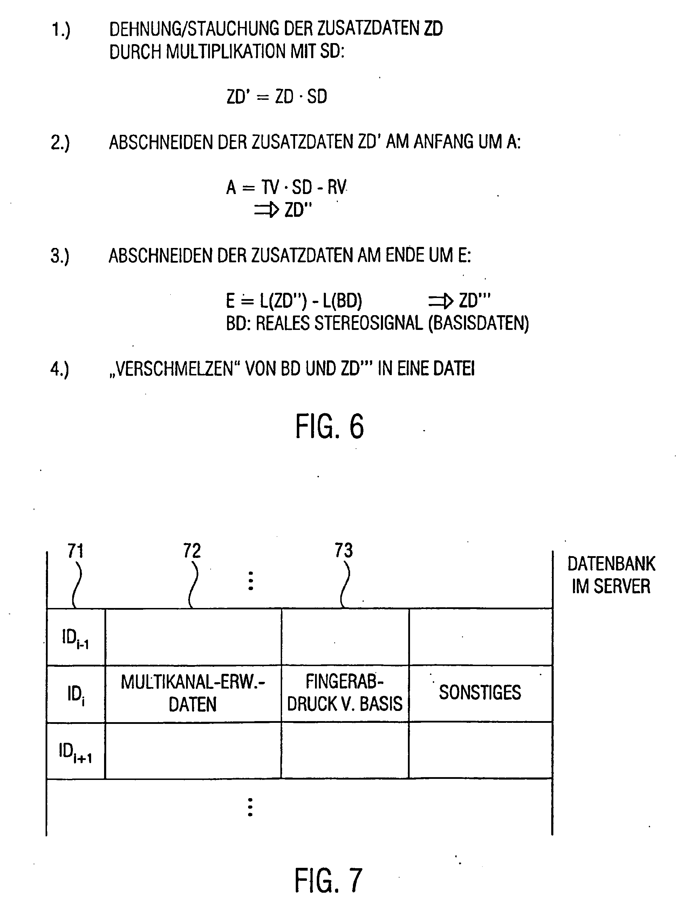

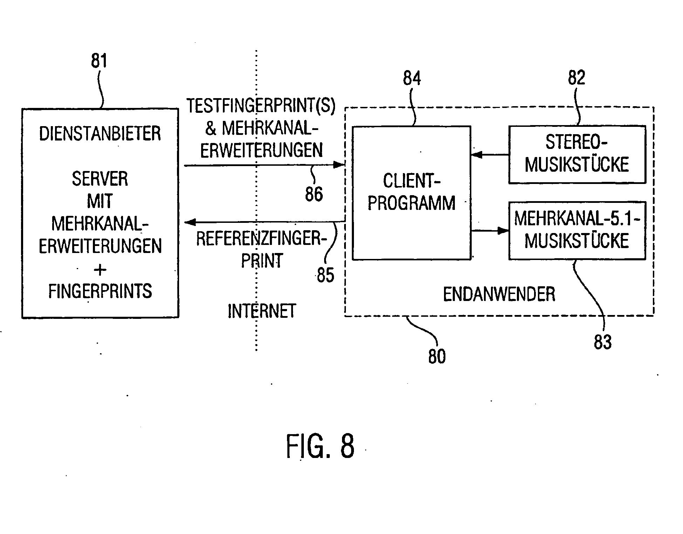

Fig. 8 zeigt das Zusammenspiel zwischen einem Endanwender 80 und einem Dienstanbieter 81. Der Dienstanbieter 81 ist beispielsweise ein Server mit einer Datenbank, wie sie in Fig. 7 dargestellt ist und nachfolgend noch erörtert wird. Der Endanwender 80 hat dagegen das Stereo-Musikstück 82 und möchte daraus unter Verwendung der Dienste des Dienstanbieters 81 Mehrkanal-5.1-Musikstücke 83 erzeugen. Hierzu wird der Endanwender 80 das Client-Programm 84 haben, dass bei dem in Fig. 8 gezeigten Ausführungsbeispiel zunächst einen Referenzfingerprint 85 eines bestimmten Stereo-Musikstücks zum Dienstanbieter 81 schickt.

Der Dienstanbieter 81 hat die in Fig. 7 gezeigte Datenbank, die mehrere Spalten/Einträge umfasst. In einer ersten Spalte 71 stehen verschiedene Identifikationen $ID_i$, $ID_{i+1}$, $ID_{i-1}$, wobei diese Identifikationen Referenzfingerabdrücke von Stereo-Musikstücken sein können, die in die Datenbank in Fig. 7 vorher eingespeichert worden sind. Der Server 81 wird nunmehr den Referenzfingerprint 85 empfangen und mit den Einträgen in seiner Spalte 71 vergleichen, um dann bei einer ausreichenden Übereinstimmung zu sagen, dass das Stereomusikstück von dem der Referenzfingerprint 85 stammt, das Musikstück ist, das in der Datenbank unter der Identifikation $ID_i$ bekannt ist.

Bei dem Anwendungsbeispiel der vorliegenden Erfindung, bei dem der Benutzer Multikanal-Erweiterungsdaten haben möchte, wird die Datenbank dann nach erfolgter Übereinstimmung auf die der Identifikation $ID_i$ zugeordneten Multikanal-Erweiterungsdaten zugreifen, die bei dem in Fig. 7 gezeigten Fall in einer Spalte 72 der Datenbank stehen können. Ferner kann man auch auf wenigstens einen Fingerabdruck der Basisdaten in zum Beispiel einer Spalte 73 zugreifen, die von Basisdaten stammen, zu denen die Multikanalerweiterungsdaten in Spalte 72 gehören.

Bei dem Ausführungsbeispiel würden die Basisdaten, zu denen die Multikanal-Erweiterungsdaten in Spalte 72 gehören, eine ideale oder wenigstens genau definierte Version des Stereo-Musikstücks sein, von dem der Referenzfingerprint 85 stammt. Der Server liefert dann in einer Antwort auf die Referenzfingerprint-Anfrage 85 die Mehrkanalerweiterungsdaten aus der Spalte 72 und einen und vorzugsweise wenigstens zwei Testfingerabdrücke, die auf die Multikanalerweiterungsdaten bezogen sind, wie es bei 86 von Fig. 8 dargestellt ist.

Das Client-Programm 84 beim Endnutzer empfängt die Mehrkanalerweiterungsdaten und die Testfingerprints 86 und bestimmt nunmehr Referenzzeitpunktinformationen, die von einem Referenzzeitpunkt in den Referenzdaten abhängen, wobei in diesem Fall die Referenzdaten gleich den Basisdaten sind, also gleich dem Stereo-Musikstück sind, dessen Referenzfingerprint 85 ursprünglich vom Client-Programm abgesendet worden ist. Hierzu verwendet das Client-Programm 84 den einen bzw. die mehreren Testfingerprints und führt ein Verfahren durch, wie es an Hand von Fig. 4 bereits dargestellt worden ist. Abhängig von dem Ergebnis der Bestimmung der Referenzzeitpunktinformationen wird das Client-Programm 84 dann vorzugsweise die Zusatzdaten manipulieren, um manipulierte Daten zu erhalten. Diese manipulierten Mehrkanalerweiterungsdaten sind genau auf das betrachtete Stereo-Musikstück 82 zugeschnitten. Damit können schließlich die Dateninformationen sowohl der Basisdaten 82 als auch der Erweiterungsdaten 72 synchron wiedergeben zu können.

Wie es an Hand von Fig. 8 dargestellt worden ist, besteht ein Anwendungsszenario der vorliegenden Erfindung darin, dass ein Dienst über das Internet Musikliebhabern eine Erweiterung ihrer bestehenden Stereomusikstücke auf Versionen im Mehrkanalformat 5.1 anbietet. Hierzu erzeugt der Diensteanbieter aus den Mehrkanalversionen der Musikstücke die Mehrkanalzusatzdaten (Spalte 72 in Fig. 7) für die entsprechenden Stereoversionen und hält diese anschließend in der in Fig. 7 gezeigten Datenbank für den Abruf durch den Endanwender bereit.

Der Musikliebhaber (Endandwender 80) erhält dann die Zusatzdaten, beispielsweise zu sich auf den PC, um die Erweiterung auf Mehrkanaltechnik vornehmen zu können. Ein Programm im Endanwender lädt somit die Mehrkanalzusatzdaten vom Server des Dienstanbieters, öffnet die bereits vorhandenen Musikdaten, fügt die Mehrkanalzusatzdaten hinzu und speichert beides in einer Datei ab, die nunmehr nicht mehr nur für eine Stereo-Verstärker geeignet sind, sondern für einen 5.1-Vestärker. Der Musikliebhaber hat somit zusätzlich zu seiner Stereoversion auch eine Mehrkanalversion eines bestimmten Musikstücks, während der Dienstanbieter hierfür eine Bezahlung erhält, wobei keine unnütze Übertragung von bereits beim Endanwender vorhandenen Daten z. B. vom Endanwender zum Server und zurück stattgefunden hat.

Nachfolgend wird an Hand von Fig. 1 auf eine erfindungsgemäße Vorrichtung zum Synchronisieren von Zusatzdaten und Basisdaten eingegangen, die bei dem in Fig. 8 illustrierten Szenario z. B. vollständig innerhalb des Client-Programms auf dem PC des Endanwenders implementiert sein kann. Die erfindungsgemäße Vorrichtung dient zum Synchronisieren von Zusatzdaten und Basisdaten, wobei die Zusatzdaten und die Basisdaten definierte zeitliche Verläufe haben und Dateninformationen umfassen, die gemeinsam synchron wiedergebbar sind. Zunächst umfasst die Vorrichtung eine Einrichtung 10 zum Bereitstellen eines Testfingerabdrucks von Testdaten, der sich auf einen Testzeitpunkt der Testdaten bezieht.

Der Funktionalität der Einrichtung 10 wird die Kommunikation 85 vorausgehen bzw. allgemein eine möglicherweise auch klartextmäßig stattfindende Identifikation des Stücks, von dem der Endanwender Mehrkanalerweiterungsdaten haben möchte. Hier würde ein Benutzer sein Stück genau identifizieren, derart, dass der Datenbankzugriff, wie er an Hand von Fig. 7 dargestellt worden ist, um die korrekte Identifikation in der Spalte 71 zu finden, durch eine explizite Signalisierung ersetzt wird.

Vorzugsweise wird jedoch, um dem Endanwender einen maximalen Komfort zu schaffen, das Client-Programm mit einem Fingerprinting-Prozessor versehen sein, um ohne dass sich der Benutzer hierum kümmern muss, den Referenzfingerabdruck des Stereo-Musikstücks zu erzeugen, das der Benutzer letztendlich als Multikanal-Musikstück haben möchte. Vor der Funktionalität, wie sie durch die Einrichtung 10 geliefert wird, wird also eine Identifikation der Audio-Basisdaten, vorzugsweise mit Hilfe des Audio-Fingerprinting-Systems vorgenommen. Damit wird die Zuordnung der Audio-Basisdaten zu den Erweiterungsdaten möglich. Nach dieser Zuordnung ist erreicht, dass Audio-Basisdaten und Erweiterungsdaten hiermit eindeutig zugeordnet sind, und dass nun noch eine korrekte zeitsynchrone Abstimmung eines Satzes von Audiobasisdaten mit einem Satz von Erweiterungsdaten vorgenommen werden muss.

Die Testdaten, auf die sich der Testfingerabdruck bezieht, der von der Einrichtung 10 zum Bereitstellen zu einer Einrichtung 11 zum Bestimmen von Referenzzeitpunktinformationen geliefert wird, können die Zusatzdaten selbst sein, oder aber die Basisdaten oder Daten sein, die von den Zusatzdaten oder den Basisdaten abgeleitet sind. Vorzugsweise werden die Testdaten die Basisdaten in einer idealen Version sein, wie sie verwendet worden sind, um die Multikanalerweiterung in Spalte 72 der Datenbank von Fig. 7 zu erzeugen. Die Basisdaten, die der Benutzer durch die Zusatzdaten aktualisieren möchte, sind eine reale Version der idealen Basisdaten, also eine beim Benutzer befindliche Version, die im Hinblick auf die ideale Version, von der der Test-fingerabdruck abgeleitet worden ist, verändert worden sind.

Solche Veränderungen können in einer verlustbehafteten Codierung, einer Qualitätsverschlechterung z. B. durch Aufnahme von einem analogen Wiedergabegerät, wie beispielsweise einem Kassettenrekorder, oder auch durch Aufnahme von einem Lautsprecher etc. sein. Andere Manipulationen sind das Verkürzen der Basisdaten am Anfang oder am Ende oder das Dehnen/Stauchen der Basisdaten etc.

Die Testdaten können jedoch auch die Zusatzdaten selbst sein. Dies ist dann von Vorteil, wenn z. B. als Zusatzdaten der Center-Kanal zu einem Stereosignal als Basisdaten gesendet werden soll. So wird der Center-Kanal eine sehr hohe Ähnlichkeit zum linken und rechten Kanal des ursprünglichen Stereosignals haben. Daher würde auch die Einrichtung 11, wenn sie als Testfingerabdruck den Fingerabdruck der Erweiterungsdaten enthält, ebenfalls mit hoher Wahrscheinlichkeit korrekte Referenzzeitpunktinformationen bestimmen können. Die Testdaten können jedoch auch von den Zusatzdaten oder den Basisdaten abgeleitet sein. In diesem Fall könnten die Testdaten die codierte Version der Basisdaten oder Zusatzdaten sein. Ferner könnten die Testdaten eine Parameterdarstellung sein, die für die nachfolgenden Betrachtungen mit den tatsächlichen Audiodaten insofern gleichzusetzen ist, dass bei einer Verwendung von Parameterdaten beispielsweise in Form von BCC-Parametern oder IS-Parametern lediglich eine einfache Parameter-Decodierung erfolgen muß, um von der einen Datendarstellung in die andere Datendarstellung zu kommen.

Für die nachfolgende Beschreibung wird jedoch im Sinne einer übersichtlichen Beschreibung davon ausgegangen, dass der Testfingerabdruck ein Fingerabdruck der idealen Version der Basisdaten ist, also der Basisdaten, zu denen die Mehrkanaldaten, wie sie in Fig. 7 in Spalte 72 dargestellt sind, tatsächlich-gehören, also abgeleitet worden sind.

Um die in Fig. 7 gezeigte Datenbank klein zu halten, werden in der Datenbank lediglich Fingerabdrücke der idealen Basisdaten gespeichert, nicht jedoch die Basisdaten selbst. Selbstverständlich könnte die Datenbank in Fig. 7 auch die kompletten Basisdaten umfassen, und lediglich bei Anforderung die Fingerabdrücke aus den in der Datenbank vorliegenden idealen Basisdaten berechnen und zum Endanwender übertragen. Die Implementierung, bei der die Datenbank lediglich die Multikanalerweiterungsdaten und die Testfingerabdrücke der Basisdaten umfasst, führt jedoch zu einer speichersparenden Datenbank, die zudem, da sie nicht extra Fingerabdrücke berechnen muss, schneller auf Benutzeranfragen antworten kann.

Die Einrichtung 11 zum Bestimmen der Referenzzeitpunkt-Informationen liefert diese Informationen, welche von einem Referenzzeitpunkt in den Referenzdaten abhängen, wobei allgemein gesagt die Referenzdaten die Daten sind, von denen nicht der Testfingerabdruck stammt. Zur Bestimmung der Referenzzeitpunktinformationen verwendet die Einrichtung 11 den Test-Fingerabdruck, der von der Einrichtung 10 geliefert worden ist. Hierzu erhält die Einrichtung 11 auch, wie es in Fig. 1 gezeigt ist, das reale Stereosignal, also die Basisdaten, die mit Mehrkanaldaten "angereichert" werden sollen. Diese Daten werden in Fig. 1 allgemein als Referenzdaten bezeichnet.

Sowohl die Referenzzeitpunktinformationen als auch die Testzeitpunktinformationen oder die Multikanal-Erweiterungsdaten bzw. allgemein gesagt die Zusatzdaten werden bei einem bevorzugten Ausführungsbeispiel der vorliegenden Erfindung einer Einrichtung 12 zugeführt. Die Einrichtung 12 dient zum Manipulieren der Zusatzdaten unter Verwendung der Referenzzeitpunktinformationen und von Testzeitpunktinformationen, die von dem Testzeitpunkt abhängen, auf den sich der Testfingerabdruck bezieht. Ausgangsseitig liefert die Einrichtung 12 zum Manipulieren der Basisdaten sowie der Zusatzdaten manipulierte Daten, die dann einer Wiedergabeeinrichtung 13 bereitgestellt werden, die ausgangsseitig z. B. einen 5.1-Sound erzeugt.

Es sei darauf hingewiesen, dass alternativ auch die Basisdaten, also das reale Referenzsignal, durch Verkürzen, Verlängern, Dehnen/Stauchen etc. manipuliert werden kann. In diesem Fall werden die manipulierten Daten in den manipulierten Basisdaten (Referenzdaten) bestehen, während die Zusatzdaten nicht angetastet werden. Selbstverständlich kann auch eine gemischte Manipulation stattfinden; also eine Manipulation sowohl der Basisdaten als auch der Zusatzdaten, so lange die Einrichtung 12 zum Manipulieren eine Manipulation der Zusatzdaten und der Basisdaten so vornimmt, dass eine synchrone Wiedergabe der Dateninformationen aufgrund der manipulierten Daten durchführbar ist.

Wie es bereits ausgeführt worden ist, können die manipulierten Daten eine neue 5.1-Datei sein, oder die synchronisierten Daten können lediglich manipulierte Basisdaten in einer Datei und nicht manipulierte Zusatzdaten in einer anderen Datei, oder nicht manipulierte Basisdaten in einer Datei und manipulierte Zusatzdaten in einer anderen Datei oder auch sowohl manipulierte Basisdaten als auch manipulierte Zusatzdaten in jeweils eigenen Dateien umfassen. Im Falle von getrennten Dateien ist die Wiedergabeeinrichtung 13 ausgebildet, um diese beiden Dateien vor der Ansteuerung von entsprechenden Verstärkern zu verschmelzen.

Bei dem bevorzugten Ausführungsbeispiel der vorliegenden Erfindung werden jedoch lediglich die Zusatzdaten manipuliert, und wird durch die Einrichtung zum Manipulieren bereits eine komplett neue Datei gebildet in der die kompletten Dateninformationen gemeinsam enthalten sind und zwar auf eine synchronisierte Art und Weise.

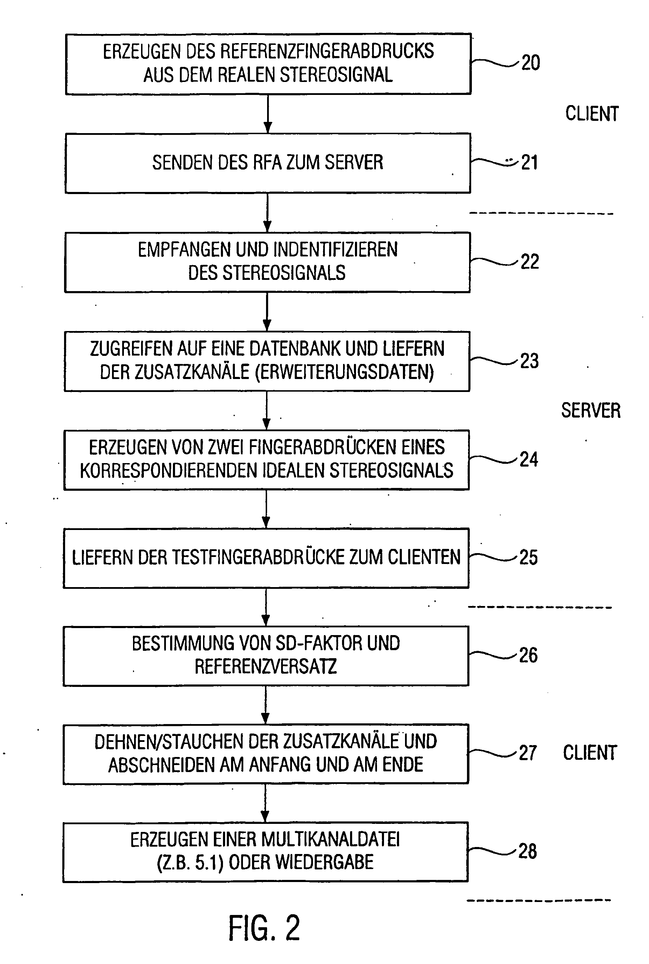

Fig. 2 zeigt eine bevorzugte Ausführungsform der Kommunikation zwischen den Client-Programm 84 und dem Server-Programm 81.

In einem ersten Schritt 20 erzeugt das Client-Programm einen Referenzfingerabdruck aus dem realen Stereosignal, das am Ende ein Multikanalsignal werden soll.

In einem Schritt 21 wird dieser Referenzfingerabdruck vom Clienten zum Server gesendet. Der Server empfängt in einem Schritt 22 den Referenzfingerabdruck und identifiziert das ideale Stereosignal, z. B. durch eine Datenbanksuche, wie sie in Verbindung mit Fig. 7 beschrieben worden ist.

Hierauf greift der Server auf seine Datenbank zu und liefert in einem Schritt 23 die Erweiterungsdaten, die schließlich zum Clientprogramm gesendet werden sollen.

In einem Schritt 24 erzeugt der Server einen oder vorzugsweise zwei Testfingerabdrücke des zu den Erweiterungsdaten gehörigen idealen Audiosignals. Diese Erzeugung im Schritt 24 kann durch reale Fingerabdruckberechnung in dem Server selbst geschehen oder vorzugsweise durch Zugriff auf eine Spalte 73 der Datenbank, in der die fertigen Testfingerabdrücke bereits stehen.

In einem Schritt 25 werden dann vorzugsweise diese zwei Testfingerabdrücke zum Client geliefert. In einem Schritt 26 wird dann die Einrichtung 11 von Fig. 1 aktiv, um Referenzzeitpunktinformationen zu bestimmen, die von dem Referenzzeitpunkt in den Referenzdaten abhängen. Vorzugsweise sind die Referenzzeitpunktinformationen ein Stauchungs/Dehnungsfaktor (SD-Faktor) und ein Referenzversatz.

In einem Schritt 27 wird der Client dann seine Einrichtung zum Manipulieren aktivieren, um die Erweiterungsdaten zu dehnen oder zu stauchen und zwar gemäß dem SD-Faktor, und um ferner ggf. ein Abschneiden der Zusatzdaten am Anfang oder am Ende derselben durchzuführen.

In einem Schritt 28 wird der Client dann bei einem bevorzugten Ausführungsbeispiel der vorliegenden Erfindung eine Multikanaldatei beispielsweise im 5.1-Surround-Format erzeugen und durch die Wiedergabeeinrichtung 13 von Fig. 1 wiedergeben.

Nachfolgend wird anhand von Fig. 4 eine erste Funktionalität der Einrichtung 12 zum Manipulieren von Fig. 1 dargestellt, die in einer Bestimmung der Kürzung der Audiobasisdaten und des relativen Zeitversatzes der Audiobasisdaten zu den Erweiterungsdaten besteht. Sobald diese Kürzung festgestellt ist, können die Erweiterungsdaten durch eine stattzufindende Verkürzung manipuliert werden. Der in Fig. 4 gezeigt Testversatz $t_v$ bezieht sich auf einen Versatz des Test-Fingerabdrucks auf die ideale Version der Basisdaten, also auf die ideale Version der Stereodaten, auf die die Multikanalerweiterungsdaten in Spalte 72 von Fig. 7 bezogen sind.

Wie es bereits ausgeführt worden ist, und im Fall 44 von Fig. 4 dargestellt ist, muss keine Manipulation der Erweiterungsdaten vorgenommen werden, wenn der Testversatz $t_v$ gleich dem Referenz-Versatz $t_x$ ist, welcher durch die Einrichtung 11 bestimmt worden ist. Wird dagegen festgestellt, dass der Test-Versatz $t_v$ kleiner als der Referenz-Versatz $t_x$ ist, so stellt sich heraus, dass das Basissignal zu lang ist. Dies bedeutet in einem praktischen Anwendungsszenario, dass ein Benutzer sein reales Basissignal zu lang gemacht hat, also am Anfang eine Pause hinzugefügt hat, die in den idealen Basisdaten nicht enthalten ist. In diesem Fall müssen die Zusatzdaten aufgefüllt werden, wie es bei 45 in Fig. 4 gezeigt ist. Diese Auffüllung kann durch verschiedene Methoden durchgeführt werden, beispielsweise durch Einfügen von Nullen oder aber auch durch Interpolation, Prädiktion etc.

Stellt die Einrichtung 11 fest, dass der Referenzversatz $t_x$ kleiner als der Testversatz $t_v$ ist, wird also der Fall 46 in Fig. 4 festgestellt, so bedeutet dies, dass das Basissignal zu kurz ist, also durch den Benutzer bei der Aufzeichnung desselben absichtlich oder unabsichtlich gekürzt worden ist. In diesem Fall müssen auch die Zusatzdaten an diese Situation angepasst werden, indem sie um die entsprechende Differenz zwischen den beiden Versätzen am Anfang abgeschnitten werden.

Dies wird nachfolgend anhand eines Beispiels dargestellt. Die Audiobasisdaten sind als das (eine) Referenzsignal (Länge Tr) zu betrachten, die Erweiterungsdaten bzw. die hierzu zeitsynchron vorliegenden entsprechenden Audiodaten sind als das (eine) Testsignal (Länge $T_r$) zu betrachten. Praktischerweise wird man jetzt einen Fingerprint vom Testsignal nutzen, der zu dem Zeitpunkt $t_x$ beginnt und eine Länge von y Sekunden abdeckt. Vergleicht man jetzt mit Hilfe der Zuordnungstechnik des Audio-Fingerprinting-Systems Test- mit Referenzfingerprint, so kann mit Hilfe der gewonnenen Aussage über den Versatz den der Test-Fingerprint relativ zum Referenz-Fingerprint hat, eine eindeutige Aussage über das Fehlen von Daten am Anfang des Audiobasissignals getroffen werden. Ist der Versatz genau gleich $t_x$, so wurde das Audiobasissignal weder verkürzt noch verlängert. Ist der Versatz kleiner als $t_x$, so wurde das Audiobasissignal um $t_x - T_{off}$ verkürzt. Ist der Versatz größer als $t_x$, so wurde das Audiobasissignal um $T_{off} - t_x$ verlängert.

Mit Hilfe dieser Maßnahme wird somit eine Längenänderung im Sinne von "Verkürzung" oder "Verlängerung", wie sie oben definiert worden sind, am Anfang des Audiobasissignals erkannt. Durch die Bestimmung des zeitlichen Versatzes alleine ist jedoch bereits ein zeitsynchroner Anknüpfungspunkt der Erweiterungsdaten an die Audiobasisdaten bestimmt worden.

Die Gesamtlänge des Test- und des Referenzsignals ist bekannt oder kann aus den vorhandenen Audiodaten bestimmt werden, beispielsweise durch Zugriff auf die den einzelnen Daten zu Grunde liegende Abtastfrequenz. Zusammen mit den Informationen über den relativen zeitlichen Versatz zueinander ist damit auch bekannt, ob das Referenzsignal relativ zum Testsignal eine Kürzung/Verlängerung am Ende des realen Basissignals im Vergleich zum idealen Testsignal aufweist. Die Einrichtung 12 zum Manipulieren ist in diesem Fall ebenfalls ausbildet, um auf diese Situation entsprechend zu reagieren, also die Erweiterungsdaten am Ende mit Nullen aufzufüllen, zu interpolieren oder mittels einer Prädiktion aufzufüllen oder aber zu kürzen, indem ein bestimmtes Segment einer bestimmten zeitlichen Länge am Ende der Erweiterungsdaten abgeschnitten bzw. eliminiert wird.

Es sei darauf hingewiesen, dass das Kürzen/Verlängern am Anfang oder am Ende nicht unbedingt mit einer Löschung entsprechender Werte durchgeführt werden muss, sondern dass eine Kürzung oder Verlängerung in diesem Zusammenhang auch darin zu sehen ist, dass zu eliminierende Datenwerte in den Zusatzdaten bei der Verschmelzung der Zusatzdaten mit den Basisdaten oder bei der Wiedergabe allgemein nicht berücksichtigt werden.

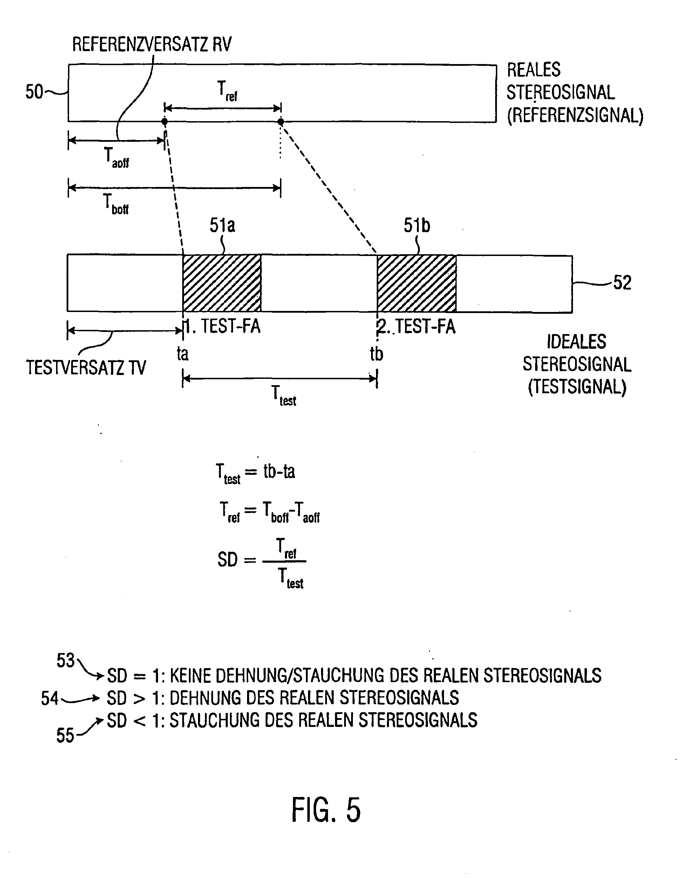

Nachfolgend wird an Hand von Fig. 5 auf die Bestimmung des Stauchungs/Dehnungsfaktors (SD-Faktor) der Audiobasisdaten eingegangen. Fig. 5. zeigt bei 50 ein reales Stereosignal als Beispiel für ein Referenzsignal bzw. für die Audiobasisdaten. Bei 52 ist in Fig. 5 das korrespondierende ideale Stereosignal bzw. das Testsignal dargestellt, von dem die Zusatzdaten, wie beispielsweise die Multikanalerweiterungsdaten in der Spalte 27 von Fig. 7, abgeleitet sind. Um den Stauchungs/Dehnungsfaktor zu berechnen, erhält die Einrichtung zum Bestimmen der Referenzzeitpunktinformationen, die den Stauchungs/Dehnungs-Faktor bei einem bevorzugten Ausführungsbeispiel der vorliegenden Erfindung umfassen, einen ersten Testfingerabdruck und einen zweiten Testfingerabdruck. Der zeitliche Bereich, der von dem ersten Test-Fingerabdruck im idealen Stereosignal überstrichen wird, ist in Fig. 5 mit 51a bezeichnet. Ähnlich ist der zeitliche Abschnitt des idealen Stereosignals, der durch den zweiten Testfingerabdruck umfasst ist, mit 51b bezeichnet. Ferner ist der erste Testfingerabdruck auf einen Testzeitpunkt $t_a$ bezogen, während der zweite Testfingerabdruck auf den Testzeitpunkt $t_b$ bezogen ist. Der Abstand zwischen $t_b$ und $t_a$ wird als $\Delta T_{test}$ bezeichnet.

Die Einrichtung 11 zum Bestimmen von Referenzzeitpunktinformationen von Fig. 1 wird unter Verwendung des ersten Testfingerabdrucks einen ersten Referenzversatz $Ta_{off}$ und wird für den zweiten Testfingerabdruck einen zweiten Referenzversatz als Referenzzeitpunktinformationen ermitteln, wobei dieser zweite Referenzversatz als $Tb_{off}$ bezeichnet ist. Ist die zeitliche Differenz zwischen den beiden Versätzen im realen Stereosignal ist mit $\Delta T_{ref}$ und $\Delta T_{test}$ gleich groß, so liegt der Fall 53 vor, bei dem der Stauchungs/Dehnungsfaktor SD gleich 1 ist. Es hat also keine Dehnung/Stauchung des realen Stereosignals, also des Referenzsignals bzw. der Basisdaten, stattgefunden. Ist der Stauchungs/Dehnungsfaktor hingegen größer als 1, so liegt Fall 54 vor, was bedeutet, dass das reale Stereosignal gedehnt worden ist. Somit müssen die Zusatzdaten ebenfalls um denselben Faktor SD gedehnt werden. Ist der Stauchungs/Dehnungsfaktor SD dagegen kleiner als 1, so liegt Fall 55 vor, was auf eine Stauchung des realen Stereosignals hindeutet. Die Einrichtung 12 zum Manipulieren wird daher in diesem Fall als Reaktion auf die festgestellte Stauchung des realen Stereosignals auch eine Stauchung der Zusatzdaten, wie beispielsweise der Multikanalerweiterungsdaten, durchführen.

Die Bestimmung des zeitlichen Versatzes $Ta_{off}$ gelingt mit einem Fingerprint vom Testsignal, der beim Zeitpunkt $t_a$ beginnt. Anschließend erfolgt die Bestimmung des zeitlichen Versatzes $Tb_{off}$ mit einem Fingerprint vom Testsignal, der beim Zeitpunkt $t_b$ beginnt. Die Dauer der Fingerprints kann in praktischen Anwendungen kleiner als $t_b - t_a$ sein. Dies muss aber nicht so sein (=Überlappung der Fingerprints). Die zeitliche Differenz zwischen beiden Testpunkten im Testsignal ist bekannt bzw. gegeben als $\Delta T_{Test} = t_b - t_a$. Für das Referenzsignal kann diese aus den zeitlichen Versätzen berechnet werden $\Delta T_{ref} = Tb_{aff} - Ta_{off}$. Der Stauchungs/Dehnungsfaktor SD ergibt sich nun zu SD = $\Delta T_{ref} / \Delta T_{test}$.

Ist SD = 1 so liegt keine Stauchung/Dehnung der Audiobasisdaten vor, die Erweiterungsdaten können diesbezüglich unverändert übernommen werden. Ist SD < 1, so liegt eine Stauchung der Audiobasisdaten vor, die Erweiterungsdaten müssen mit gleichem SD angepasst werden. Ist SD > 1 so liegt eine Dehnung der Audiobasisdaten vor, die Erweitungsdaten müssen mit gleichem SD angepasst werden.

Schließlich sei darauf hingewiesen, dass eine Verwendung von entsprechen Audiofingerprinting-Verfahren bevorzugt wird, da dadurch sicher gestellt wird, dass sämtliche Bestimmungen von Referenzzeitpunktinformationen und davon abhängige Manipulationen an den Zusatzdaten auch dann noch funktionieren, wenn das Audiobasissignal in gewissen Grenzen signalverarbeitungstechnisch verändert wird, so z. B. durch eine verlustbehaftete Codierung/Decodierung oder durch bewusste oder unbewusste Qualitätsverschlechterung beispielsweise durch Aufzeichnung von einem analogen Wiedergabegerät etc.

Nachfolgend wird an Hand von Fig. 6 noch einmal die bevorzugte Reihenfolge der Funktionalitäten der Einrichtung 11 von Fig. 1 und der Einrichtung 12 von Fig. 1 dargestellt. So bestimmt die Einrichtung 11 zunächst als Referenzzeitpunkt Informationen über die Dehnung/Stauchung der Basisdaten und führt eine Dehnung/Stauchung der Zusatzdaten ZD durch Multiplikation mit dem bestimmten Stauchungs/Dehnungsfaktor SD durch. Hierbei werden zunächst manipulierte Zusatzdaten ZD' erhalten. Hierauf werden dann die zunächst manipulierten Zusatzdaten ZD' am Anfang um den Abschnitt A abgeschnitten, wobei der Abschnitt A so bestimmt wird, wie es bei 2 (in Fig. 6) dargestellt ist. Damit werden weiter manipulierte Zusatzdaten ZD'' erhalten. Hierauf werden die Zusatzdaten ZD'' dann am Ende um den Abschnitt E abgeschnitten, der berechnet wird, wie es in Fig. 6 2.3) gezeigt ist. Damit werden schließlich die manipulierten Zusatzdaten ZD''' erhalten. Dann am Ende dieser Sequenz werden bei einem bevorzugten Ausführungsbeispiel die Basisdaten und die manipulierten Zusatzdaten ZD''' in einer Datei verschmolzen, die dann von einem herkömmlichen Multikanalwiedergabegerät abgespielt werden kann.

Diese Sequenz sei nachfolgend an Hand eines Zahlenbeispiels dargestellt. Das Client-Programm berechnet einen Referenzfingerprint von einem Stereo-Musikstück und schickt diesen über eine Internetverbindung zum Server des Dienstanbieters. Dieser identifiziert das Musikstück und schickt dem Client-Programm die kompletten Mehrkanalerweiterungen des Stereo-Musikstücks und zwei Testfingerprints von der Stelle 60s und 120s (Länge je 15s). Das Client-Programm bestimmt den zeitlichen Versatz für beide Testfingerprints durch Anwendung von Algorithmen des Audio-Fingerprinting. Aus der Differenz der zeitlichen Versatzwerte wird der Stauchungs/Dehnungsfaktor zu 1,03 bestimmt. Dieser wird auf die Mehrkanalerweitungsdaten entsprechend angewendet. Die Berechnung des zeitlichen Versatzes für den Test-Fingerprint an der Stelle 60s ergibt 57,3s. Somit müssen die Mehrkanalerweiterungsdaten um (60 * 1,03-57,3)s am Anfang gekürzt werden. Auch wird ggf. am Ende auch noch gekürzt. Nach diesen Veränderungen an den Mehrkanalerweiterungsdaten können diese den Stereobasisdaten hinzugefügt werden und als neue Mehrkanalaudiodatei abgespeichert werden.

Bevorzugte Anwendungen der vorliegenden Erfindung liegen in der nachträglichen Erweiterung bereits existierender Audiodaten, wie beispielsweise MP3-Daten auf ein Multikanal-Format, wie beispielsweise MP3-Surround. Allerdings kann das erfindungsgemäße Konzept auch überall dort angewendet werden, wo Zusatzdaten, zu Basisdaten zeitsynchron hinzugefügt werden sollen, unabhängig davon, ob die Basisdaten bereits vorhanden waren und die Zusatzdaten nachträglich synchronisiert werden sollen. Auch erlaubt das erfindungsgemäße Konzept die Erzeugung von den Zusatzdaten aus Basisdaten an einem Ort, die getrennte Verbreitung der Basisdaten und der Zusatzdaten und die Zusammenfügung der Basisdaten und der Zusatzdaten an einem anderen Ort aufgrund des erfindungsgemäßen Synchronisationsverfahrens.

Abhängig von den Gegebenheiten können die erfindungsgemäßen Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass ein Verfahren ausgeführt wird. Allgemein besteht die Erfindung somit auch in einem Computer-Programm-Produkt mit einem auf einem maschinenlesbaren Träger gespeicherten Programmcode zur Durchführung des Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

**Patentansprüche**

1.  Vorrichtung zum Synchronisieren von Zusatzdaten und Basisdaten, wobei die Zusatzdaten und die Basisdaten definierte zeitliche Verläufe haben, Audio- oder Videoinformationen aufweisen, und Dateninformationen umfassen, die gemeinsam wiedergebbar sind, mit folgenden Merkmalen:

    einer Einrichtung (10) zum Bereitstellen eines Testfingerabdrucks von Testdaten, der sich auf einen Testzeitpunkt der Testdaten bezieht, wobei die Testdaten die Zusatzdaten oder die Basisdaten sind, oder wobei die Testdaten von den Zusatzdaten oder den Basisdaten abhängen;
    einer Einrichtung (11) zum Bestimmen von Referenzzeitpunktinformationen (tx, SD), die von einem Referenzzeitpunkt in den Referenzdaten abhängen, wobei die Referenzdaten Daten sind, von denen nicht der Testfingerabdruck stammt, unter Verwendung des Testfingerabdrucks; und
    einer Einrichtung (12) zum Manipulieren der Zusatzdaten oder der Basisdaten unter Verwendung der Referenzzeitpunktinformationen und von Testzeitpunktinformationen ($t_v$), die von dem Testzeitpunkt abhängen, um manipulierte Daten zu erhalten, wobei die Einrichtung (12) zum Manipulieren ausgebildet ist um die Zusatzdaten oder die Basisdaten so zu manipulieren, dass eine synchrone Wiedergabe der Dateninformationen aufgrund der manipulierten Daten durchführbar ist, und wobei die Einrichtung (12) zum Manipulieren ausgebildet ist, um eine zeitliche Stauchung/Dehnung, ein Abschneiden an einem zeitlichen Anfang oder zeitlichen Ende von Daten oder eine Datenerzeugung an einem zeitlichen Anfang oder einem zeitlichen Ende von Daten durchzuführen, um die manipulierten Daten zu erhalten.

2.  Vorrichtung gemäß Anspruch 1, bei der der Testfingerabdruck so ausgebildet ist, dass derselbe einen zeitlichen Verlauf hat, der mit dem zeitlichen Verlauf der Daten, von dem derselbe abgeleitet ist, zusammenhängt, und bei der die Einrichtung (11) zum Bestimmen ausgebildet ist, um einen Referenzfingerabdruck von den Referenzdaten zu erhalten, wobei der Referenzfingerabdruck einen zeitlichen Verlauf hat, der von dem zeitlichem Verlauf der Referenzdaten abhängt, und

bei der die Einrichtung (11) zum Bestimmen ferner ausgebildet ist, um den Testfingerabdruck mit dem Referenzfingerabdruck für verschiedene zeitliche Versätze des Testfingerabdrucks und des Referenzfingerabdrucks zu korrelieren, und um bei einer maximalen Übereinstimmung des Referenzfingerabdrucks und des Testfingerabdrucks einen zugeordneten zeitlichen Versatz als Referenzzeitpunktinformationen zu bestimmen.

3. Vorrichtung nach Anspruch 2, bei der der Testfingerabdruck eine zeitliche Länge des Testsignals umfast, die kürzer als eine zeitliche Länge des Referenzsignals ist, die durch den Referenzfingerabdruck umfasst ist.

4. Vorrichtung nach einem der vorhergehenden Ansprüche, bei der die Basisdaten Audiodaten sind, bei der die Zusatzdaten zeitliche Audiodaten oder parametrische Audiodaten sind, die auf die Basisdaten bezogen sind, bei der die Einrichtung (10) zum Bereitstellen ausgebildet ist um den Testfingerabdruck bereitzustellen, der von den Zusatzdaten abgeleitet ist, bei der die Einrichtung (11) zum Bestimmen ausgebildet ist, um unter Verwendung eines Referenzfingerabdrucks von den Basisdaten die Referenzzeitpunktinformationen zu bestimmen, und bei der die Einrichtung (12) zum Manipulieren ausgebildet ist, um die Zusatzdaten zu manipulieren, um die manipulierten Daten zu erhalten.

5. Vorrichtung nach einem der vorgehenden Ansprüche, bei der die Zusatzdaten in den Basisdaten nicht enthaltene zusätzliche Kanäle in Form von zeitlichen Abtastwerten oder parametrischen Informationen, wie BCC-Parameter ICLD-, ICTD- oder ICC- Parameterdaten, Banddaten, die sich auf ein Frequenzband beziehen, das in den Basisdaten reduziert oder nicht vorhanden ist, eine höhere Skalierungsschicht als eine Skalierungsschichtordnung der Basisdaten oder Qualitätsverbesserungsdaten, um einen ausgewählten Teil der Basisdaten zu verbessern, umfassen.

6. Vorrichtung nach einem der vorhergehenden Ansprüche, bei der die Basisdaten eine reale Version eines Audiosignals darstellen, bei der die Einrichtung (11) zum Bestimmen ausgebildet ist, um einen Testfingerabdruck einer idealen Version des Audiosignals zu erhalten, der die Zusatzdaten zugeordnet sind, wobei die ideale Version verwendet worden ist, um die Zusatzdaten zu erzeugen, wobei die Zusatzdaten Multikanalerweiterungsdaten sind; bei der die Einrichtung (12) zum Manipulieren ausgebildet ist, um die Zusatzdaten so zu manipulieren, dass sie der realen Version des Audiosignals zugeordnet sind, das durch die realen Basisdaten (10) repräsentiert wird, wobei sich die reale Version bei einem Benutzer befindet und im Hinblick auf die ideale Version verändert ist.

7. Vorrichtung nach einem der vorhergehenden Ansprüche, bei der die Einrichtung (10) zum Bereitstellen augebildet ist, um einen weiteren Testfingerabdruck bereitzustellen, der sich auf einen weiteren Testzeitpunkt bezieht, der von dem einen Testzeitpunkt um einen vorbestimmten zeitlichen Abstand beabstandet ist, bei der die Einrichtung (11) zum Bestimmen ausgebildet ist, um unter Verwendung des weiteren Testfingerabdrucks weitere Referenzzeitpunktinformationen zu bestimmen, wobei ein weiterer Referenzzeitpunkt von dem einen Referenzzeitpunkt einen zeitlichen Referenzabstand aufweist, bei der die Einrichtung (12) zum Manipulieren ausgebildet ist, um aufgrund des Testabstandes und des Referenzabstandes einen Dehnungs/Stauchungsfaktor zu berechnen und die Zusatzdaten oder die Basisdaten unter Verwendung dieses Dehnungs/Stauchungs-Faktors zeitlich zu dehnen oder zu stauchen.

8. Vorrichtung nach Anspruch 7 bei der die Einrichtung (12) zum Manipulieren ausgebildet ist um den Stauchungs/Dehnungsfaktor folgendermaßen zu berechnen:

$$SD = \Delta T_{ref}/\Delta T_{test},$$

wobei $\Delta T_{test}$ eine zeitliche Differenz zwischen dem einen Testzeitpunkt und dem weiteren Testzeitpunkt ist, wobei $\Delta T_{ref}$ eine zeitliche Differenz zwischen einem ersten Referenzversatz $Ta_{off}$ und einem zweiten Referenzversatz $Tb_{off}$

ist, wobei der erste Referenzversatz $Ta_{off}$ erhalten wird, wenn der erste Testfingerabdruck mit dem Referenzsignal korreliert wird, und wobei der zweite Referenzversatz $Tb_{off}$ erhalten wird, wenn der weitere Testfingerabdruck mit dem Referenzsignal korreliert wird.

9. Vorrichtung nach einem der vorangehenden Ansprüche, bei der die Einrichtung (11) zum Bestimmen ausgebildet ist, um als Referenzzeitpunktinformationen einen zeitlichen Referenzversatz des Referenzzeitpunktes zu einem zeitlichen Anfang der Referenzdaten zu ermitteln und
bei der die Einrichtung zum Manipulieren ausgebildet ist um von den Zusatzdaten oder den Basisdaten abhängig von einem Testversatz zwischen dem Testzeitpunkt und einem zeitlichen Anfang der Testdaten und dem Referenzversatz einen Eingangsbereich (A) am Anfang der Zusatzdaten oder der Basisdaten zu eliminieren.

10. Vorrichtung nach Anspruch 9, bei der die Einrichtung (11) zum Bestimmen ausgebildet ist, um einen Dehnungs/Stauchungsfaktor zu ermitteln, um den das Referenzsignal bezüglich eines Signals gedehnt oder gestaucht ist, von dem der Testfingerabdruck abgeleitet ist, und
bei der die Einrichtung (12) zum Manipulieren ausgebildet ist, um den Testversatz mit dem Dehnungs-/Stauchungsfaktor zu gewichten, so dass der Eingangsbereich ferner von dem Dehnungs/Stauchungsfaktor abhängt.

11. Vorrichtung nach einem der vorhergehenden Ansprüche, bei der die Einrichtung (12) zum Manipulieren ausgebildet ist, um einen Eliminationsbereich (E) am Ende der Basisdaten oder der Zusatzdaten abhängig von einer zeitlichen Länge von am Anfang gekürzten oder gedehnten oder gestauchten Basisdaten oder Zusatzdaten zu eliminieren.

12. Client-Vorrichtung (84) mit folgenden Merkmalen:

einer Vorrichtung zum Synchronisieren von Zusatzdaten und Basisdaten, wobei die Zusatzdaten und die Basisdaten definierte zeitliche Verläufe haben und Dateninformationen umfassen, die gemeinsam wiedergebbar sind, gemäß Anspruch 1, wobei die Einrichtung (10) zum Bereitstellen eine Einrichtung zum Empfangen des Testfingerabdrucks von Testdaten aufweist.

13. Client-Vorrichtung nach Anspruch 12, bei der die Einrichtung (12) zum Manipulieren ausgebildet ist, um nur die Zusatzdaten zu manipulieren, um die manipulierten Daten zu erhalten, und um den Basisdaten die manipulierten Daten hinzuzufügen, um einen Ergebnisdatensatz zu erhalten, der die Dateninformationen umfasst.

14. Client-Vorrichtung nach Anspruch 12 und 13, die ferner folgendes Merkmal aufweist:

eine Wiedergabevorrichtung (13) zum Wiedergeben der Dateninformationen unter Verwendung der manipulierten Daten.

15. Verfahren zum Synchronisieren von Zusatzdaten und Basisdaten, wobei die Zusatzdaten und die Basisdaten definierte zeitliche Verläufe haben, Audio- oder Videoinformationen aufweisen, und Dateninformationen umfassen, die gemeinsam wiedergebbar sind, mit folgenden Schritten:

Bereitstellen (10) eines Testfingerabdrucks von Testdaten, der sich auf einen Testzeitpunkt der Testdaten bezieht, wobei die Testdaten die Zusatzdaten oder die Basisdaten sind, oder wobei die Testdaten von den Zusatzdaten oder den Basisdaten abhängen;
Bestimmen (11) von Referenzzeitpunktinformationen (tx, SD), die von einem Referenzzeitpunkt in den Referenzdaten abhängen, wobei die Referenzdaten Daten sind,
von denen nicht der Testfingerabdruck stammt, unter Verwendung des Testfingerabdrucks; und
Manipulieren (12) der Zusatzdaten oder der Basisdaten unter Verwendung der Referenzzeitpunktinformationen und von Testzeitpunktinformationen ($t_v$), die von dem Testzeitpunkt abhängen, um manipulierte Daten zu erhalten, die so manipuliert sind, dass eine synchrone Wiedergabe der Dateninformationen aufgrund der manipulierten Daten durchführbar ist, wobei das Manipulieren eine zeitliche Stauchung/Dehnung, ein Abschneiden an einem zeitlichen Anfang oder zeitlichen Ende von Daten oder eine Datenerzeugung an einem zeitlichen Anfang oder einem zeitlichen Ende von Daten umfasst, um die manipulierten Daten zu erhalten.

16. Verfahren zum Betreiben einer Client-Vorrichtung (84), mit folgenden Schritten:

Senden (21) eines Referenzfingerabdrucks von Basisdaten; und
einem Verfahren zum Synchronisieren von Zusatzdaten und Basisdaten, wobei die Zusatzdaten und die Basisdaten definierte zeitliche Verläufe haben und Dateninformationen umfassen, die gemeinsam wiedergebbar sind, gemäß Anspruch 15, wobei der Schritt des Bereitstellens das Empfangen eines Testfingerabdrucks von Testdaten, der sich auf einen Testzeitpunkt der Testdaten bezieht, wobei die Testdaten die Zusatzdaten oder die Basisdaten sind, oder von den Zusatzdaten oder den Basisdaten abhängen, und von den Zusatzdaten, die den Basisdaten zugeordnet sind umfasst.

17. Computerprogramm mit einem Programmcode zum Durchführen des Verfahrens nach Patentanspruch 15 oder 16, wenn das Verfahren auf einem Computer abläuft.

**Claims**

1. Apparatus for synchronizing additional data and base data, the additional data and the base data having defined time courses, comprising audio or video information, and including data information that can be reproduced together, comprising:

a means (10) for providing a test fingerprint of test data, said test fingerprint relating to a test time instant of the test data, the test data being the additional data or the base data, or the test data depending on the additional data or the base data;

a means (11) for determining reference time instant information (tx, SD) dependent on a reference time instant in the reference data, the reference data being data from which the test instant fingerprint does not originate, while using the test fingerprint; and

a means (12) for manipulating the additional data or the base data, while using the reference time instant information and using test time instant information ($t_v$) dependent on the test time instant, in order to obtain manipulated data, the means (12) for manipulating being formed to manipulate the additional data or the base data so that synchronous reproduction of the data information can be performed on the basis of the manipulated data, and the means (12) for manipulating being formed to perform time shrinking/stretching, clipping at a temporal beginning or temporal end of data, or data generation at a temporal beginning or a temporal end of data in order to obtain the manipulated data.

2. Apparatus of claim 1, wherein the test fingerprint is formed so that same has a time course connected to the time course of the data from which same is derived, and

wherein the means (11) for determining is formed to obtain a reference fingerprint from the reference data, the reference fingerprint having a time course dependent on the time course of the reference data, and

wherein the means (11) for determining is further formed to correlate the test fingerprint with the reference fingerprint for various time offsets of the test fingerprint and of the reference fingerprint, and to determine an associated time offset as reference time instant information when there is a maximum match of the reference fingerprint and the test fingerprint.

3. Apparatus of claim 2, wherein the test fingerprint includes a temporal length of the test signal which is shorter than a temporal length of the reference signal included by the reference fingerprint.

4. Apparatus of any of the preceding claims, wherein the base data is audio data, wherein the additional data is temporal audio data or parametric audio data related to the base data,

wherein the means (10) for providing is formed to provide the test fingerprint derived from the additional data, wherein the means (11) for determining is formed to determine the reference time instant information while using a reference fingerprint of the base data, and wherein the means (12) for manipulating is formed to manipulate the additional data to obtain the manipulated data.

5. Apparatus of any of the preceding claims, wherein the additional data includes additional channels not contained in the base data in the form of time samples or parametric information such as, for example, BCC parameters, ICLD, ICTD or ICC parameter data, band data referring to a frequency band reduced or not present in the base data, a scaling layer higher than a scaling layer order of the base data or quality enhancement data in order to enhance a selected part of the base data.

6. Apparatus of any of the preceding claims, wherein the base data represents a real version of an audio signal, wherein the means (11) for determining is formed to obtain a test fingerprint of an ideal version of the audio signal with which the additional data is associated, said ideal version having been used for producing the additional data, said additional data being multi-channel extension data;

wherein the means (12) for manipulating is formed to manipulate the additional data such that the latter is associated with the real version of the audio signal represented by the real base data (10), said real version being located at a user and being altered with regard to the ideal version.

7. Apparatus of any of the preceding claims, wherein the means (10) for providing is formed to provide a further test fingerprint relating to a further test time instant spaced apart from the one test time instant by a predetermined time distance,

wherein the means (11) for determining is formed to determine further reference time instant information while using the further test fingerprint, a further reference time instant having a temporal reference distance from the one reference time instant,

wherein the means (12) for manipulating is formed to calculate a stretching/shrinking factor on the basis of the test distance and the reference distance and to temporally stretch or shrink the additional data or the base data while using this stretching/shrinking factor.

8. Apparatus of claim 7, wherein the means (12) for manipulating is formed to calculate the shrinking/stretching factor as follows:

$$SD = \Delta T_{ref}/\Delta T_{test},$$

wherein $\Delta T_{test}$ is a time difference between the one test time instant and the further test time instant, wherein $\Delta T_{ref}$ is a time difference between a first reference offset $Ta_{off}$ and a second reference offset $Tb_{off}$, wherein the first reference offset $Ta_{off}$ is obtained when the first test fingerprint is correlated with the reference signal, and wherein the second reference offset $Tb_{off}$ is obtained when the further test fingerprint is correlated with the reference signal.

9. Apparatus of any of the preceding claims, wherein the means (11) for determining is formed to determine a temporal reference offset of the reference time instant at a temporal beginning of the reference data as reference time instant information, and

wherein the means for manipulating is formed to eliminate an introductory portion (A) at the beginning of the additional data or the base data from the additional data or the base data as a function of a test offset between the test time instant and a temporal beginning of the test data and on the reference offset.

10. Apparatus of claim 9, wherein the means (11) for determining is formed to determine a stretching/shrinking factor by which the reference signal is stretched or shrunk with reference to a signal from which the test fingerprint is derived, and

wherein the means (12) for manipulating is formed to weight the test offset by the stretching/shrinking factor, so that the introductory portion further depends on the stretching/shrinking factor.

11. Apparatus of any of the preceding claims, wherein the means (12) for manipulating is formed to eliminate an elimination portion (E) at the end of the base data or the additional data as a function of a temporal length of base data or additional data shortened or stretched or shrunk at the beginning.

12. Client apparatus (84), comprising:

an apparatus for synchronizing additional data and base data, the additional data and the base data having defined time courses and including data information that can be reproduced together, as claimed in claim 1, the means (10) for providing including a means for receiving the test fingerprint of test data.

13. Client apparatus of claim 12, wherein the means (12) for manipulating is formed to manipulate only the additional data so as to obtain the manipulated data, and to add the manipulated data to the base data so as to obtain a result data set including the data information.

14. Client apparatus of claim 12 and 13, further comprising:

a reproduction device (13) for reproducing the data information while using the manipulated data.

15. Method of synchronizing additional data and base data, the additional data and the base data having defined time courses comprising audio or video information, and including data information, which can be reproduced together, comprising the steps of:

providing (10) a test fingerprint of test data, said test fingerprint relating to a test time instant of the test data, the test data being the additional data or the base data, or the test data depending on the additional data or the base data;

determining (11) reference time instant information (tx, SD) dependent on a reference time instant in the reference data, the reference data being data from which the test instant fingerprint does not originate, while using the test fingerprint; and

manipulating (12) the additional data or the base data, using the reference time instant information and test time instant information ($t_v$) dependent on the test time instant, in order to obtain manipulated data manipulated such that synchronous reproduction of the data information can be performed on the basis of the manipulated data, said manipulating including time shrinking/stretching, clipping at a temporal beginning or temporal end of data, or data generation at a temporal beginning or a temporal end of data, in order to obtain the manipulated data.

16. Method of operating a client apparatus (84), comprising the steps of:

transmitting (21) a reference fingerprint of base data;

a method of synchronizing additional data and base data, the additional data and the base data having defined time courses and including data information that can be reproduced together, as claimed in claim 15, the step of providing comprising receiving a test fingerprint of test data, said test fingerprint relating to a test time instant of the test data, the test data being the additional data or the base data or being dependent on the additional data or the base data and on the additional data associated with the base data.

17. Computer program comprising program code for performing the method of claim 15 or 16 when the method is executed on a computer.

**Revendications**

1. Dispositif pour synchroniser des données supplémentaires et des données de base, les données supplémentaires et les données de base ayant des évolutions dans le temps, présentant des informations audio ou vidéo, et comportant des informations de données qui peuvent être reproduites ensemble, aux caractéristiques suivantes:

un moyen (10) pour mettre à disposition une empreinte digitale de test des données de test qui se rapporte à un moment de test des données de test, les données de test étant les données supplémentaires ou les données de base, ou les données de test dépendant des données supplémentaires ou des données de base;

un moyen (11) pour déterminer des informations de moment de référence (tx, SD) qui dépendent d'un moment de référence dans les données de référence, les données de référence étant des données desquelles n'est pas dérivée l'empreinte digitale de test, à l'aide de l'empreinte digitale de test; et

un moyen (12) pour manipuler les données supplémentaires ou les données de base à l'aide des informations de moment de référence et des informations de moment de test ($t_v$) qui dépendent du moment de test, pour obtenir des données manipulées, le moyen (12) pour manipuler étant conçu pour manipuler les données supplémentaires ou les données de base de sorte qu'une reproduction synchrone des informations de données puisse être réalisée sur base des données manipulées, et le moyen (12) pour manipuler étant conçu pour réaliser une compression/un allongement dans le temps, une découpe à un début dans le temps ou à une fin dans le temps de données, ou une génération de données à un début dans le temps ou à une fin dans le temps de données, pour obtenir les données manipulées.

2. Dispositif selon la revendication 1, dans lequel l'empreinte digitale de test est conçue de sorte qu'elle ait une évolution dans le temps qui est en rapport avec l'évolution dans le temps des données de laquelle elle est dérivée, et dans lequel le moyen (11) pour déterminer est conçu pour obtenir une empreinte digitale de référence des données de référence, l'empreinte digitale de référence ayant une évolution dans le temps qui dépend de l'évolution dans le temps des données de référence, et dans lequel le moyen (11) pour déterminer est par ailleurs conçu pour corréler l'empreinte digitale de test avec l'empreinte digitale de référence pour différents décalages dans le temps de l'empreinte digitale de test et de l'empreinte digitale de référence, et pour déterminer, en cas de coïncidence maximale de l'empreinte digitale de référence et de l'empreinte digitale de test, un décalage dans le temps associé comme informations de moment de référence.

3. Dispositif selon la revendication 2, dans lequel l'empreinte digitale de test comporte une longueur dans le temps du signal de test qui est plus courte qu'une longueur dans le temps du signal de référence qui est compris dans l'empreinte digitale de référence.

4. Dispositif selon l'une des revendications précédentes, dans lequel les données de base sont des données audio, dans lequel les données supplémentaires sont des données audio temporelles ou des données audio paramétriques qui se rapportent aux données de base,
dans lequel le moyen (10) destiné à mettre à disposition est conçu pour mettre à disposition l'empreinte digitale de test qui est dérivée des données supplémentaires,
dans lequel le moyen (11) pour déterminer est conçu pour déterminer, à l'aide d'une empreinte digitale de référence des données de base, les informations de moment de référence, et dans lequel le moyen (12) pour manipuler est conçu pour manipuler les données supplémentaires, pour obtenir les données manipulées.

5. Dispositif selon l'une des revendications précédentes, dans lequel les données supplémentaires comportent des canaux supplémentaires non contenus dans les données de base sous forme de valeurs de balayage temporelles ou d'informations paramétriques, telles que paramètres de BCC, données de paramètres ICLD, ICTD ou ICC, données de bande se rapportant à une bande de fréquences qui est présente de manière réduite ou non présente dans les données de base, une couche d'échelonnement supérieure à un ordre de couche d'échelonnement des données de base ou des données d'amélioration de qualité, pour améliorer une partie sélectionnée des données de base.

6. Dispositif selon l'une des revendications précédentes, dans lequel les données de base représentent une version réelle d'un signal audio,
dans lequel le moyen (11) pour déterminer est conçu pour obtenir une empreinte digitale de test d'une version idéale du signal audio à laquelle sont associées les données supplémentaires, la version idéale ayant été utilisée pour générer les données supplémentaires, les données supplémentaires étant des données d'extension multicanal;
dans lequel le moyen (12) pour manipuler est conçu pour manipuler les données supplémentaires de sorte qu'elles soient associées à la version réelle du signal audio qui est représentée par les données de base réelles (10), la version réelle se trouvant chez un utilisateur et étant modifiée par rapport à la version idéale.

7. Dispositif selon l'une des revendications précédentes, dans lequel le moyen (10) destiné à mettre à disposition est conçu pour mettre à disposition une autre empreinte digitale de test qui se rapporte à un autre moment de test qui est distant de l'un moment de test d'une distance temporelle prédéterminée,
dans lequel le moyen (11) pour déterminer est conçu pour déterminer, à l'aide de l'autre empreinte digitale de test, d'autres informations de moment de référence, un autre moment de référence présentant, par rapport à l'un moment de référence, une distance temporelle de référence,
dans lequel le moyen (12) pour manipuler est conçu pour calculer, sur base de la distance de test et la distance de référence, un facteur de compression/d'allongement et pour allonger ou comprimer dans le temps les données supplémentaires ou les données de base à l'aide de ce facteur de compression/ d'allongement.

8. Dispositif selon la revendication 7, dans lequel le moyen (12) pour manipuler est conçu pour calculer le facteur de compression/ d'allongement comme suit:

$$SD = \Delta T_{ref}/\Delta T_{test},$$

où $\Delta T_{test}$ est une différence temporelle entre l'un moment de test et l'autre moment de test, où $\Delta T_{ref}$ est une différence temporelle entre un premier décalage de référence $Ta_{off}$ et un deuxième décalage de référence $Tb_{off}$, le premier décalage de référence $Ta_{off}$ étant obtenu lorsque la première empreinte digitale de test est corrélée avec le signal de référence, et le deuxième décalage de référence $Tb_{off}$ étant obtenu lorsque l'autre empreinte digitale de test est corrélée avec le signal de référence.

**9.** Dispositif selon l'une des revendications précédentes, dans lequel le moyen (11) pour déterminer est conçu pour déterminer, comme informations de moment de référence, un décalage de référence dans le temps du moment de référence par rapport à un début dans le temps des données de référence, et
dans lequel le moyen pour manipuler est conçu pour éliminer, des données supplémentaires ou des données de base, en fonction d'un décalage de test entre le moment de test et un début dans le temps des données de test et du décalage de référence, une plage d'entrée (A) au début des données supplémentaires ou des données de base.

**10.** Dispositif selon la revendication 9, dans lequel le moyen (11) pour déterminer est conçu pour déterminer un facteur d'allongement/ compression par lequel le signal de référence est allongé ou comprimé par rapport à un signal duquel est dérivée l'empreinte digitale de test, et
dans lequel le moyen (12) pour manipuler est conçu pour pondérer le décalage de test par le facteur d'allongement/ compression de sorte que la plage d'entrée dépende par ailleurs du facteur d'allongement/compression.

**11.** Dispositif selon l'une des revendications précédentes, dans lequel le moyen (12) pour manipuler est conçu pour éliminer une plage d'élimination (E) à la fin des données de base ou des données supplémentaires en fonction d'une longueur dans le temps de données de base ou de données supplémentaires raccourcies ou allongées ou comprimées au début.

**12.** Dispositif client (84) aux caractéristiques suivantes:

un dispositif pour synchroniser des données supplémentaires et des données de base, où les données supplémentaires et les données de base ont des évolutions dans le temps définies et comprennent des informations de données qui peuvent être reproduites ensemble, selon la revendication 1, où le moyen (10) destiné à mettre à disposition présente un moyen destiné à recevoir l'empreinte digitale de test de données de test.

**13.** Dispositif client selon la revendication 12, dans lequel le moyen (12) pour manipuler est conçu pour ne manipuler que les données supplémentaires afin d'obtenir les données manipulées, et pour ajouter aux données de base les données manipulées afin d'obtenir un ensemble de données de résultat qui comporte les informations de données.

**14.** Dispositif client selon la revendication 12 ou 13, présentant par ailleurs la caractéristique suivante:

un dispositif de reproduction (13) destiné à reproduire les informations de données à l'aide des données manipulées.

**15.** Procédé pour synchroniser des données supplémentaires et des données de base, les données supplémentaires et les données de base ayant des évolutions dans le temps définies, présentant des informations audio ou de vidéo et comportant des informations de données qui peuvent être reproduites ensemble, aux étapes suivantes consistant à:

mettre à disposition (10) une empreinte digitale de test de données de test, qui se rapporte à un moment de test des données de test, les données de test étant les données supplémentaires ou les données de base, ou les données de test dépendant des données supplémentaires ou des données de base;
déterminer (11) des informations de moment de référence (tx, SD), qui dépendent d'un moment de référence dans les données de référence, les données de référence étant des données desquelles n'est pas dérivée l'empreinte digitale de test, à l'aide de l'empreinte digitale de test; et
manipuler (12) les données supplémentaires ou les données de base à l'aide des informations de moment de référence et d'informations de moment de test ($t_v$) qui dépendent du moment de test, pour obtenir des données manipulées qui sont manipulées de sorte que puisse être effectuée une reproduction synchrone des informations de données sur base des données manipulées, la manipulation comprenant une compression/un allongement dans le temps, une découpe à un début dans le temps ou à une fin dans le temps de données ou une génération de données à un début dans le temps ou à une fin dans le temps de données, pour obtenir les données manipulées.

**16.** Procédé pour faire fonctionner un dispositif client (84), aux étapes suivantes consistant à;
envoyer (21) une empreinte digitale de référence de données de base; et
un procédé pour synchroniser des données supplémentaires et des données de base, les données supplémentaires et les données de base ayant des évolutions dans le temps définies et comportant des informations de données qui peuvent être reproduites ensemble, selon la revendication 15, l'étape consistant à mettre à disposition comprenant la réception d'une empreinte digitale de test de données de test qui se rapporte à un moment de test des données de test, les données de test étant les données supplémentaires ou les données de base, ou dépendant des données supplémentaires ou des données de base, et des données supplémentaires associées aux données de base.

17. Programme d'ordinateur avec un code de programme pour réaliser le procédé selon la revendication 15 ou 16 lorsque le procédé est exécuté sur un ordinateur.

```
┌─────────────────────────┐
│     EINRICHTUNG ZUM     │
│   BEREITSTELLEN EINES   │      ⌇10
│     TESTFINGERABDRUCKS   │
│   (IDEALES STEREOSIGNAL) │
└─────────────────────────┘
            │
            │  TEST-FINGERABDRUCK
            ▼
(REALES          ┌─────────────────────────┐
STEREOSIGNAL)    │     EINRICHTUNG ZUM     │
 ─────────────▶  │     BESTIMMEN VON       │      ⌇11
                 │   REFERENZZEITPUNKT-    │
REFERENZDATEN    │    INFORMATIONEN        │
                 └─────────────────────────┘
                            │
                            │  REFERENZZEITPUNKT-
                            │  INFORMATION
·BASISDATEN                 ▼
 ─────────────▶  ┌─────────────────────────┐
(REALES          │    EINRICHTUNG ZUM      │   TESTZEITPUNKTINFORM.
STEREOSIGNAL)    │  MANIPULIEREN DER BASIS- │ ◀─────────────────
                 │   DATEN ODER DER        │
ZUSATZDATEN      │     ZUSATZDATEN         │      ⌇12
 ─────────────▶  └─────────────────────────┘
(3(+1) ZUSÄTZLICHE          │
KANÄLE)                     │  MANIPULIERTE DATEN
                            │  (ZUSÄTZLICHE KANÄLE)
BASISDATEN                  ▼
 ─────────────▶  ┌─────────────────────────┐
(REALES          │  WIEDERGABEEINRICHTUNG  │ ══▶ 5.1-SOUND
STEREOSIGNAL)    └─────────────────────────┘
                            ⌇13
```

# FIG. 1

FIG. 2

31 ⌐ | 1 | 2 | 3 | 4 | 5 | 6 | 7 | AUDIOSIGNAL

⟶ t

...

30 ⌐ | TFA 1 | TFA 2 | TFA 3 | TFA 4 | TFA 5 | TFA 6 | TFA 7 | ... | FINGERABDRUCK

⟶ t

TFA i = TEILFINGERABDRUCK FÜR
DAS SEGMENT i DES
AUDIOSIGNALS

## FIG. 3

42

LÄNGE $T_r$

40 ⌐ | | | | | | | | TFA i | | | | | REFER.-FINGERABDRUCK
DES BASISSIGNALS

REF.ZEIT-
PUNKT

BESTE ÜBEREINSTIMMUNG

REFERENZ-
VERSATZ
$t_x$

43

41 ⌐

TEST-
VERSATZ

$T_t$

TEST-FINGERABDRUCK DES
IDEALEN BASISSIGNALS MIT
BEKANNTEN TESTZEITPUNKT
(TEST-VERSATZ)

44 ⌐ $t_x = t_x$: BASISIGNAL RICHTIG, KEINE MAN.
45 ⌐ $t_x < t_x$: BASISSIGNAL ZU LANG, ZD AUFFÜLLEN       FIG. 4
46 ⌐ $t_x > t_x$: BASISIGNAL ZU KURZ, ZD ABSCHNEIDEN

REFERENZVERSATZ RV

50

$T_{ref}$

REALES
STEREOSIGNAL
(REFERENZSIGNAL)

$T_{aoff}$

$T_{boff}$

51a

51b

52

1. TEST-FA

2. TEST-FA

IDEALES
STEREOSIGNAL
(TESTSIGNAL)

TESTVERSATZ TV

ta

tb

$T_{test}$

$T_{test} = tb-ta$

$T_{ref} = T_{boff}-T_{aoff}$

$$SD = \frac{T_{ref}}{T_{test}}$$

53 → SD = 1: KEINE DEHNUNG/STAUCHUNG DES REALEN STEREOSIGNALS
54 → SD > 1: DEHNUNG DES REALEN STEREOSIGNALS
55 → SD < 1: STAUCHUNG DES REALEN STEREOSIGNALS

FIG. 5

1.) DEHNUNG/STAUCHUNG DER ZUSATZDATEN ZD
DURCH MULTIPLIKATION MIT SD:

$$ZD' = ZD \cdot SD$$

2.) ABSCHNEIDEN DER ZUSATZDATEN ZD' AM ANFANG UM A:

$$A = TV \cdot SD - RV$$
$$\Rightarrow ZD''$$

3.) ABSCHNEIDEN DER ZUSATZDATEN AM ENDE UM E:

$$E = L(ZD'') - L(BD) \qquad \Rightarrow ZD'''$$

BD: REALES STEREOSIGNAL (BASISDATEN)

4.) „VERSCHMELZEN" VON BD UND ZD''' IN EINE DATEI

## FIG. 6

DATENBANK IM SERVER

| | 71 | 72   ⋮ | 73 | |
|---|---|---|---|---|
| $ID_{i-1}$ | | | | |
| $ID_i$ | MULTIKANAL-ERW.-DATEN | FINGERAB-DRUCK V. BASIS | SONSTIGES | |
| $ID_{i+1}$ | | | | |

⋮

## FIG. 7

81

DIENSTANBIETER

SERVER
MIT
MEHRKANAL-
ERWEITERUNGEN
+
FINGERPRINTS

TESTFINGERPRINT(S)
& MEHRKANAL-
ERWEITERUNGEN

86

REFERENZFINGER-
PRINT

85

INTERNET

84

CLIENT-
PROGRAMM

82

STEREO-
MUSIKSTÜCKE

MEHRKANAL-5.1-
MUSIKSTÜCKE

ENDANWENDER

80

83

FIG. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ROLF BARDELI ; FRANK KURTH.** Robust Identification of Time-Scaled Audio. *AES 25Th conference,* Juni 2004